(19) Europäisches Patentamt European Patent Office Office européen des brevets

(11) **EP 4 633 246 A1**

(12) **EUROPEAN PATENT APPLICATION**
published in accordance with Art. 153(4) EPC

(43) Date of publication:
**15.10.2025   Bulletin 2025/42**

(21) Application number: 23910415.1

(22) Date of filing: 22.12.2023

(51) International Patent Classification (IPC):
*H04W 52/02* (2009.01)

(52) Cooperative Patent Classification (CPC):
**H04L 5/00; H04W 52/02; H04W 72/23;** Y02D 30/70

(86) International application number:
**PCT/CN2023/141128**

(87) International publication number:
**WO 2024/140489 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  28.12.2022  CN 202211701531

(71) Applicant: **Huawei Technologies Co., Ltd.
Shenzhen, Guangdong 518129 (CN)**

(72) Inventors:
• **LU, Yujiao**
  **Shenzhen, Guangdong 518129 (CN)**
• **GUO, Yinghao**
  **Shenzhen, Guangdong 518129 (CN)**

(74) Representative: **Gill Jennings & Every LLP
The Broadgate Tower
20 Primrose Street
London EC2A 2ES (GB)**

(54)   **ENERGY SAVING METHOD AND APPARATUS**

(57)    This application provides a power saving method and an apparatus, to reduce power consumption of a terminal device, thereby prolonging battery life of the terminal device and battery service life. The method includes: A terminal device determines that first data is to be transmitted through a first path instead of a second path, where the first path is a transmission path between the terminal device and a first access network device, the second path is a transmission path between the terminal device and a second access network device, and the terminal device is separately connected to the first access network device and the second access network device; and completely or incompletely stops monitoring a physical downlink control channel PDCCH between the terminal device and the second access network device.

FIG. 8

EP 4 633 246 A1

## Description

This application claims priority to Chinese Patent Application No. 202211701531.4, filed with the China National Intellectual Property Administration on December 28, 2022 and entitled "ENERGY SAVING METHOD AND APPARATUS", which is incorporated herein by reference in its entirety.

## TECHNICAL FIELD

Embodiments of this application relate to the communication field, and in particular, to a power saving method and an apparatus.

## BACKGROUND

Dual-connectivity (dual-connectivity, DC) is introduced to a 5th generation (5th generation, 5G) new radio (new radio, NR) system in the 3rd generation partnership project (3rd generation partnership project, 3GPP). To be specific, a terminal device may be connected to two base stations simultaneously, where one base station is a master node (master node, MN), and the other base station is a secondary node (secondary node, SN). The MN is usually used as a control anchor, and the SN usually provides an additional air interface transmission capability for the terminal device. Based on the DC, load balancing between the base stations can be improved, and a network throughput can be improved to some extent.

However, in a current dual-connectivity channel monitoring mechanism, power consumption of the terminal device is extremely high, affecting battery life of the terminal device and battery service life.

## SUMMARY

This application provides a power saving method and an apparatus, to reduce power consumption of a terminal device, thereby prolonging battery life of the terminal device and battery service life.

According to a first aspect, a power saving method is provided. The method may be performed by a terminal device, or may be performed by a component of the terminal device, for example, a processor, a chip, or a chip system of the terminal device, or may be implemented by a logical module or software that can implement all or some functions of the terminal device. The method includes: determining that first data is to be transmitted through a first path instead of a second path, where the first path is a transmission path between the terminal device and a first access network device, the second path is a transmission path between the terminal device and a second access network device, and the terminal device is separately connected to the first access network device and the second access network device; and completely or incompletely stopping monitoring a physical downlink control channel (physical downlink control channel, PDCCH) between the terminal device and the second access network device.

Based on this solution, when determining that the first data is to be transmitted through the first path instead of the second path, the terminal device completely or incompletely stops monitoring the PDCCH between the terminal device and the second access network device. Compared with a case in which the terminal device keeps monitoring the PDCCH, this can reduce energy consumption of the terminal device, and further prolong battery life of the terminal device and battery service life.

In a possible design, incompletely stopping monitoring the PDCCH includes: stopping monitoring downlink control information that is transmitted through the PDCCH and that is scrambled by using a preset scrambling identifier.

In a possible design, incompletely stopping monitoring the PDCCH includes: monitoring the PDCCH based on a first cycle, where the first cycle is greater than an original monitoring cycle of the PDCCH; and/or monitoring the PDCCH in first duration, where the first duration is less than original monitoring duration of the PDCCH.

In a possible design, completely or incompletely stopping monitoring the PDCCH includes: A first medium access control (media access control, MAC) entity completely or incompletely stops monitoring the PDCCH, where the first MAC entity is a MAC entity that is in the terminal device and that corresponds to the second path.

In a possible design, completely or incompletely stopping monitoring the PDCCH includes: when there is no to-be-transmitted data in the first MAC entity and/or a radio link control (radio link control, RLC) entity associated with the first MAC entity, completely or incompletely stopping monitoring the PDCCH.

In a possible design, before completely or incompletely stopping monitoring the PDCCH, the power saving method further includes: when there is to-be-transmitted data in the first MAC entity and/or the RLC entity, sending the to-be-transmitted data to the second access network device.

In a possible design, completely or incompletely stopping monitoring the PDCCH includes: when a radio bearer associated with the first MAC entity does not include a first radio bearer, completely or incompletely stopping monitoring the PDCCH, where the first radio bearer is a radio bearer corresponding to a first service, the first service is a service other than a service corresponding to first data in services corresponding to the first MAC entity, and the radio bearer includes at least one of a signaling radio bearer (signaling radio bearer, SRB) or a data radio bearer (data radio bearer, DRB).

In a possible design, the power saving method further includes: obtaining first indication information, where the first indication information indicates to completely or incompletely stop monitoring the PDCCH.

In a possible design, obtaining the first indication information includes: sending second indication information to the first access network device and/or the second access network device, where the second indication information indicates that the first data is to be transmitted through the first path instead of the second path; and receiving the first indication information from the first access network device and/or the second access network device.

Based on the possible design, when the terminal device determines that the first data is to be transmitted through the first path instead of the second path, the terminal device may notify the second access network device by using the second indication information. Alternatively, the terminal device may notify the first access network device by using the second indication information, and then the first access network device notifies the second access network device, so that the second access network device learns that the first data is to be transmitted through the first path instead of the second path. This avoids a waste of resources caused by sending, by the second access network device, the control information to the terminal device in a time period in which the first MAC entity completely or incompletely stops monitoring the PDCCH between the terminal device and the second access network device.

In a possible design, the second indication information includes an identifier ID of a cell group that is in the second access network device and that serves the terminal device, and/or duration for completely or incompletely stopping monitoring the PDCCH.

According to a second aspect, a power saving method is provided. The method may be performed by a first access network device, or may be performed by a component of the first access network device, for example, a processor, a chip, or a chip system of the first access network device, or may be implemented by a logical module or software that can implement all or some functions of the first access network device. The method includes: determining that first data is to be transmitted through a first path instead of a second path, where the first path is a transmission path between a terminal device and the first access network device, the second path is a transmission path between the terminal device and a second access network device, and the terminal device is separately connected to the first access network device and the second access network device; and sending first indication information to the terminal device, or sending third indication information to the second access network device, where the first indication information indicates the terminal device to completely or incompletely stop monitoring a PDCCH between the terminal device and the second access network device, and the third indication information indicates that the first data is to be transmitted through the first path instead of the second path.

Based on this solution, when the first access network device determines that the first data is to be transmitted through the first path instead of the second path, the first access network device may notify the terminal device by using the first indication information, so that the terminal device can completely or incompletely stop, based on the first indication information, monitoring the PDCCH between the terminal device and the second access network device, thereby saving energy for the terminal device.

Alternatively, when the first access network device determines that the first data is to be transmitted through the first path instead of the second path, the first access network device may notify the second access network device by using the third indication information, so that the second access network device learns that the first data is to be transmitted through the first path instead of the second path. This avoids a waste of resources caused by sending, by the second access network device, control information to the terminal device in a time period in which the terminal device completely or incompletely stops monitoring the PDCCH between the terminal device and the second access network device.

In a possible design, determining that the first data is to be transmitted through the first path instead of the second path includes: receiving second indication information from the terminal device, where the second indication information indicates that the first data is to be transmitted through the first path instead of the second path; and determining, based on the second indication information, that the first data is to be transmitted through the first path instead of the second path.

In a possible design, the second indication information includes an identifier ID of a cell group that is in the second access network device and that serves the terminal device, and/or duration for completely or incompletely stopping monitoring the PDCCH.

For technical effects brought by any possible design of the second aspect, refer to technical effects brought by a corresponding design of the first aspect. Details are not described herein again.

According to a third aspect, a power saving method is provided. The method may be performed by a second access network device, or may be performed by a component of the second access network device, for example, a processor, a chip, or a chip system of the second access network device, or may be implemented by a logical module or software that can implement all or some functions of the second access network device. The method includes: receiving fourth indication information from a terminal device or a first access network device, where the fourth indication information indicates that first data is to be transmitted through a first path instead of a second path, the first path is a transmission path between the terminal device and the first access network device, the second path is a transmission path between the terminal device and the second access network device, and the terminal device is separately connected to the first access network device and the second access network device; and sending first indication information to the terminal device, where the first indication information indicates the terminal device to completely or incompletely stop monitoring a physical downlink control channel PDCCH between the terminal device and the second access network device.

Based on this solution, the second access network device receives the fourth indication information, and sends the first indication information to the terminal device, so that the terminal device can completely or incompletely stop, based on the first indication information, monitoring the PDCCH between the terminal device and the second access network device. Compared with a case in which the first access network device determines the first indication information or the terminal device independently determines that the first data is to be transmitted through the first path instead of the second path, this can avoid a phenomenon that information is missed due to a determining error of the first access network device or the terminal device.

In a possible design, the fourth indication information includes an identifier ID of a cell group that is in the second access network device and that serves the terminal device, and/or duration for completely or incompletely stopping monitoring the PDCCH.

For technical effects brought by any possible design of the third aspect, refer to technical effects brought by a corresponding design of the first aspect. Details are not described herein again.

According to a fourth aspect, a communication apparatus is provided, to implement the foregoing methods. The communication apparatus may be the terminal device in the first aspect, or an apparatus included in the terminal device, for example, a chip or a chip system; or the communication apparatus may be the first access network device in the second aspect, or an apparatus included in the first access network device, for example, a chip or a chip system; or the communication apparatus may be the second access network device in the third aspect, or an apparatus included in the second access network device, for example, a chip or a chip system. The communication apparatus includes corresponding modules, units, or means (means) for implementing the methods. The modules, units, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and any one of the possible implementations of the foregoing aspects. The transceiver module may include a receiving module and a sending module that are respectively configured to implement a receiving function and a sending function in any one of the foregoing aspects and any one of the possible implementations of the foregoing aspects.

In some possible designs, the transceiver module may include a transceiver circuit, a transceiver, a transceiver machine, or a communication interface.

According to a fifth aspect, a communication apparatus is provided, and includes a processor and a memory. The memory is configured to store computer instructions, and when the processor executes the instructions, the communication apparatus is enabled to perform the method according to any one of the aspects. The communication apparatus may be the terminal device in the first aspect, or an apparatus included in the terminal device, for example, a chip or a chip system; or the communication apparatus may be the first access network device in the second aspect, or an apparatus included in the first access network device, for example, a chip or a chip system; or the communication apparatus may be the second access network device in the third aspect, or an apparatus included in the second access network device, for example, a chip or a chip system.

According to a sixth aspect, a communication apparatus is provided, and includes a processor and a communication interface. The communication interface is configured to communicate with a module outside the communication apparatus, and the processor is configured to execute a computer program or instructions, to enable the communication apparatus to perform the method according to any one of the aspects. The communication apparatus may be the terminal device, or an apparatus included in the terminal device, for example, a chip or a chip system; or the communication apparatus may be the first access network device in the second aspect, or an apparatus included in the first access network device, for example, a chip or a chip system; or the communication apparatus may be the second access network device in the third aspect, or an apparatus included in the second access network device, for example, a chip or a chip system.

According to a seventh aspect, a communication apparatus is provided, and includes at least one processor. The processor is configured to execute a computer program or instructions stored in a memory, to enable the communication apparatus to perform the method according to any one of the aspects. The memory may be coupled to the processor, or may be independent of the processor. The communication apparatus may be the terminal device in the first aspect, or an apparatus included in the terminal device, for example, a chip or a chip system; or the communication apparatus may be the first access network device in the second aspect, or an apparatus included in the first access network device, for example, a chip or a chip system; or the communication apparatus may be the second access network device in the third aspect, or an apparatus included in the second access network device, for example, a chip or a chip system.

In some possible designs, the communication apparatus includes the memory, and the memory is configured to store necessary program instructions and data.

In some possible designs, when the apparatus is a chip system, the apparatus may include a chip, or may include a chip and another discrete component.

It may be understood that, when the communication apparatus provided in any one of the fourth aspect to the seventh aspect is a chip, a sending action/function of the communication apparatus may be understood as outputting information, and a receiving action/function of the communication apparatus may be understood as inputting information.

According to an eighth aspect, a computer-readable storage medium is provided. The computer-readable storage medium stores a computer program or instructions. When the program or the instructions are run on a communication apparatus, the communication apparatus is enabled to perform the method according to any one of the aspects.

According to a ninth aspect, a computer program product including instructions is provided. When the computer program product is run on a communication apparatus, the communication apparatus is enabled to perform the method according to any one of the aspects.

For technical effects brought by any design manner in the fourth aspect to the ninth aspect, refer to technical effects brought by different design manners in the first aspect, the second aspect, or the third aspect. Details are not described herein again.

**BRIEF DESCRIPTION OF DRAWINGS**

FIG. 1 is a diagram of a size of a data frame in an XR service according to this application;

FIG. 2 is a diagram of a structure of a user plane protocol according to this application;

FIG. 3 is a diagram of an MR-DC dual connectivity architecture according to this application;

FIG. 4 is a diagram of a bearer type in an MR-DC architecture according to this application;

FIG. 5 is a diagram of time distribution of DRX according to this application;

FIG. 6 is diagram of other time distribution of DRX according to this application;

FIG. 7 is a diagram of an architecture of a mobile communication system according to this application;

FIG. 8 is a schematic flowchart of a power saving method according to this application;

FIG. 9 is a diagram of a structure of a terminal device according to this application;

FIG. 10 is a schematic flowchart of another energy saving method according to this application;

FIG. 11 is a schematic flowchart of another energy saving method according to this application;

FIG. 12 is a schematic flowchart of another energy saving method according to this application;

FIG. 13 is a schematic flowchart of another energy saving method according to this application;

FIG. 14 is a schematic flowchart of another energy saving method according to this application;

FIG. 15 is a schematic flowchart of another energy saving method according to this application;

FIG. 16 is a schematic flowchart of another energy saving method according to this application;

FIG. 17 is a schematic flowchart of another energy saving method according to this application;

FIG. 18 is a schematic flowchart of another energy saving method according to this application;

FIG. 19 is a diagram of a structure of a communication apparatus according to this application;

FIG. 20 is a diagram of a structure of another communication apparatus according to this application; and

FIG. 21 is a diagram of a structure of another communication apparatus according to this application.

**DESCRIPTION OF EMBODIMENTS**

Unless otherwise specified, "/" in the descriptions of this application represents an "or" relationship between associated objects. For example, A/B may represent A or B. In this application, "and/or" describes only an association relationship between associated objects and represents that three relationships may exist. For example, A and/or B may represent the following three cases: Only A exists, both A and B exist, and only B exists, where A and B may be singular or plural.

In the descriptions of this application, unless otherwise specified, "a plurality of" means two or more than two. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, words such as "example" or "for example" are used to represent giving an example, an illustration, or a description. Any embodiment or design solution described by using "example" or "for example" in embodiments of this application should not be explained as being more preferred or having more advantages than another embodiment or design solution. Exactly, use of the terms such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with another feature based on a requirement. Correspondingly, the apparatus provided in embodiments of this application may also correspondingly implement these features or functions. Details are not described herein.

In this application, unless otherwise specified, for same or similar parts in embodiments, refer to each other. In embodiments of this application and the implementations/implementation methods in embodiments, unless otherwise specified or a logical collision occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

For ease of understanding of the technical solutions in embodiments of this application, the following first briefly describes technologies related to this application.

1. Extended reality (extended reality, XR)

The XR may refer to a real-virtual combined and human-machine interaction environment implemented by using various computing technologies and wearable devices. The XR may include augmented reality (augmented reality, AR), mixed reality (mixed reality, MR), virtual reality (virtual reality, VR), and other forms.

The XR is one of the 5th generation (5th generation, 5G) multi-media applications that are currently focused on in the industry field. Modeling analysis is performed on service features of the XR in the 3rd generation partnership project (3rd generation partnership project, 3GPP) R17, and a data frame of an XR service is usually periodically generated based on a preset frame rate. An uplink AR service is used as an example. It can be analyzed that the AR service has the following features:

(1) A frame rate for generating a data frame may be 60 frames per second (frames per second, FPS), or the frame rate may be 120 FPS. The frame rate of 60 FPS indicates that 60 frames of video images can be generated per second. In other words, one video frame is generated every 16.66 milliseconds (milli second, ms). The frame rate of 120 FPS indicates that 120 frames of video images can be generated per second. In other words, one video frame is generated every 8.33 ms.
(2) A jitter (jitter) occurring during transmission of a data frame complies with a truncated Gaussian distribution, and a truncated range may be [-4, 4] ms.
(3) Fluctuation of a size of each data frame complies with the truncated Gaussian distribution. An average value of the size of the data frame may satisfy the following Formula (1):

$$mean = R \times 1e6/F/8 \qquad \text{Formula (1),}$$

where mean is the average value of the size of the data frame, R is a transmission rate of the data frame, and F is a frame rate. For example, F is 60 FPS, and R is 20 megabits bits per second (megabits per second, Mbps). According to Formula (1), mean is 41.67 kilobytes (kilobytes, KB). The size of the data frame may be [0.5*mean, 1.5*mean].

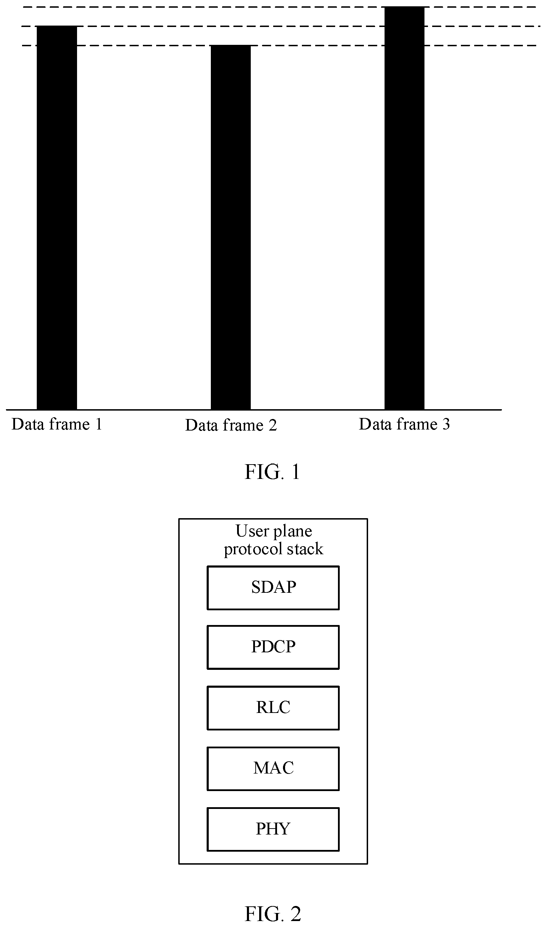

The size of each data frame in the XR service is not fixed. A downlink service is used as an example. As shown in FIG. 1, sizes of a data frame 1, a data frame 2, and a data frame 3 may be different. However, sizes of the data frame 1, the data frame 2, and the data frame 3 all comply with a probability distribution (for example, the truncated Gaussian distribution). The data frame 1, the data frame 2, and the data frame 3 may all arrive at a base station side according to a cycle of 1/FPS. In addition, jitters that occur when the data frame 1, the data frame 2, and the data frame 3 arrive at the base station side all comply with a probability distribution (for example, the truncated Gaussian distribution).

2. Radio interface protocol

A radio interface protocol stack may be classified into a user plane protocol stack and a control plane protocol stack. The user plane protocol stack may include a packet data convergence protocol (packet data convergence protocol, PDCP) layer, a radio link control (radio link control, RLC) layer, a medium access control (media access control, MAC) layer, a physical (physical, PHY) layer, and the like. The PHY layer belongs to a first layer (also referred to as a layer 1 (layer 1, L1)), and the MAC layer, the RLC layer, and the PDCP layer belong to a second layer (also referred to as a layer 2 (layer 2, L2)). The control plane protocol stack may include a radio resource control (radio resource control, RRC) protocol layer, a service data adaptation protocol (service data adaptation protocol, SDAP) layer, a PDCP layer, an RLC layer, a MAC layer, and a PHY layer. The RRC layer of the control plane belongs to a third layer (also referred to as a layer 3 (layer 3, L3)).

As shown in FIG. 2, in the user plane protocol stack, an SDAP layer is located above a PDCP layer, the PDCP layer is located above an RLC layer, the RLC layer is located above a MAC layer, and the MAC layer is located above a PHY layer. When a transmit side sends data to a receive side, protocol layers sequentially process a data packet in a top-down sequence shown in FIG. 2, and finally transmit the data packet to the receive side through an air interface. After receiving the data packet through the air interface, the receive side sequentially performs corresponding processing on the data packet in a sequence opposite to that of the transmit side. Processing on the data packet at each protocol layer is implemented by a function entity corresponding to the protocol layer. For example, processing at the PDCP layer is implemented by a corresponding PDCP layer entity, and processing at the RLC layer is implemented by a corresponding RLC layer entity.

It should be noted that the user plane protocol stack shown in FIG. 2 constitutes no limitation on the solutions of this application. During actual application, the user plane protocol stack may include more or fewer protocol layers than those shown in the figure.

(3) Dual-connectivity (dual-connectivity, DC)

The dual-connectivity (dual-connectivity, DC) is introduced to a 5G new radio (new radio, NR) system in a 3GPP. To be specific, a terminal device may be connected to two base stations simultaneously, where one base station is a master node (master node, MN), and the other base station is a secondary node (secondary node, SN). The MN is usually used as a control anchor, and the SN usually provides an additional air interface transmission capability for the terminal device. The MN provides an air interface resource for the terminal device through at least one cell, and the at least one cell group is referred to as a master cell group (master cell group, MCG). The SN also provides an air interface resource for the terminal device through at least one cell, and the at least one cell group is referred to as a secondary cell group (secondary cell group, SCG). In the DC, the terminal device may include two MAC entities, and the two MAC entities respectively correspond to the MN and the SN.

The DC in the 5G NR system may also be referred to as multi-radio dual connectivity (multi-radio dual connectivity, MR-DC). In an MR-DC mechanism, the two base stations connected to the terminal device may be respectively a base station in a 4th generation (4th generation, 4G) long term evolution (long term evolution, LTE) system and a base station in the 5G NR system. Alternatively, both the two base stations connected to the terminal device may be base stations in the 5G NR system. For example, an MR-DC architecture may include the following four dual-connectivity modes:

Mode 1: EN-DC

E represents E-UTRA, and N represents NR. E-UTRA refers to evolved UMTS terrestrial radio access (evolved UMTS terrestrial radio access, E-UTRA), and UMTS refers to universal mobile telecommunications system (universal mobile telecommunications system, UMTS). EN-DC refers to dual connectivity in a 4G core network in which a base station in the 4G LTE system is used as an MN and a base station in the 5G NR system is used as an SN.

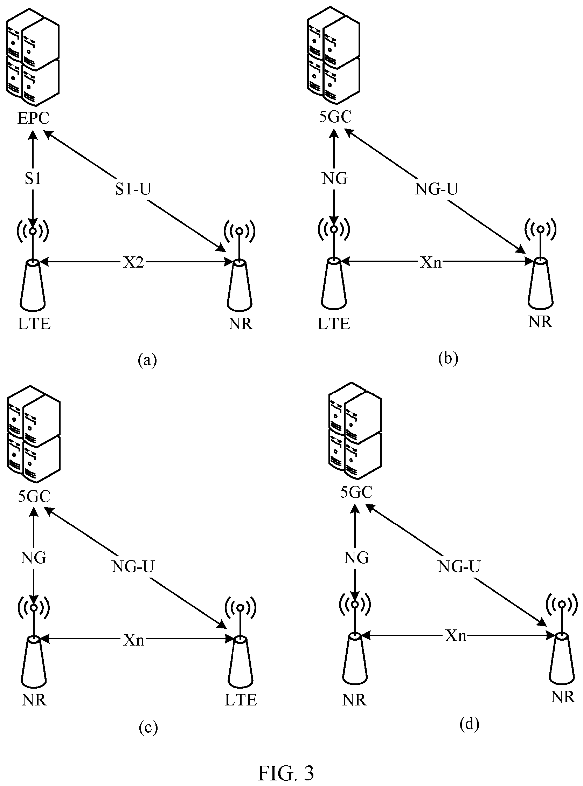

For example, in Mode 1, to be specific, when a core network is an evolved packet core network (evolved packet core, EPC), a base station in the 4G LTE system is used as an MN, and a base station in the 5G NR system is used as an SN, as shown in (a) in FIG. 3, there is an X2 interface between the MN and the SN. In this case, a connection between the MN and the SN may include at least a control plane connection. In other words, control signaling may be transmitted between the MN and the SN. Further, the connection between the MN and the SN may further include a user plane connection. In other words, data may be transmitted between the MN and the SN. There is an S1 interface between the MN and the EPC. In this case, a connection between the MN and the EPC may include at least a control plane connection. In other words, control signaling may be transmitted between the MN and the EPC. Further, the connection between the MN and the EPC may further include a user plane connection. In other words, data may be transmitted between the MN and the EPC. The SN and the EPC may be connected through an S1-U interface. In this case, the connection between the SN and the EPC is a user plane connection. In other words, data may be transmitted between the SN and the EPC.

Mode 2: NGEN-DC

NG represents NG-RAN, E represents E-UTRA, and N represents NR. NG-RAN refers to a next-generation radio access network (next-generation radio access network, NG-RAN). NGEN-DC refers to dual connectivity in a 5G core network in which a base station in the 4G LTE system is used as an MN and a base station in the 5G NR system is used as an SN.

For example, in Mode 2, to be specific, when a core network is a 5G core network (5G core network, 5GC), a base station in the 4G LTE system is used as an MN, and a base station in the 5G NR system is used as an SN, as shown in (b) in FIG. 3, there is an Xn interface between the MN and the SN. In this case, a connection between the MN and the SN may include at least a control plane connection. In other words, control signaling may be transmitted between the MN and the SN. Further, the connection between the MN and the SN may further include a user plane connection. In other words, data may be transmitted between the MN and the SN. There is an NG interface between the MN and the 5GC. In this case, a connection between the MN and the 5GC may include at least a control plane connection. In other words, control signaling may be transmitted between the MN and the 5GC. Further, the connection between the MN and the 5GC may further include a user plane connection. In other words, data may be transmitted between the MN and the 5GC. There is an NG-U interface between the SN and the 5GC. In this case, the connection between the SN and the 5GC is a user plane connection. In other words, data may be transmitted between the SN and the 5GC.

Mode 3: NE-DC

N represents NR, and E represents E-UTRA. NE-DC refers to dual connectivity in a 5G core network in which a base station in the 5G NR system is used as an MN and a base station in the 4G LTE system is used as an SN. For example, in Mode 3, to be specific, when a core network is a 5GC, a base station in the 5G NR system is used as an MN, and a base station in the 4G LTE system is used as an SN, as shown in (c) in FIG. 3, there is an Xn interface between the MN and the SN. In this case, a connection between the MN and the SN may include at least a control plane connection. In other words, control signaling may be transmitted between the MN and the SN. Further, the connection between the MN and the SN may further include a user plane connection. In other words, data may be transmitted between the MN and the SN. There is an NG interface between the MN and the 5GC. In this case, a connection between the MN and the 5GC may include at least a control plane connection. In other words, control signaling may be transmitted between the MN and the 5GC. Further, the connection between the MN and the 5GC may further include a user plane connection. In other words, data may be transmitted between the MN and the 5GC. There is an NG-U interface between the SN and the 5GC. In this case, the connection between the SN and the 5GC is a user plane connection. In other words, data may be transmitted between the SN and the 5GC.

Mode 4: NR-DC

NR-DC refers to dual connectivity based on two base stations in a 5G NR system in a 5G core network.

For example, in Mode 4, to be specific, when a core network is a 5GC, and both the two base stations are base stations in the 5G NR system, as shown in (d) in FIG. 3, there is an Xn interface between the MN and the SN. In this case, a connection between the MN and the SN may include at least a control plane connection. In other words, control signaling may be transmitted between the MN and the SN. Further, the connection between the MN and the SN may further include a user plane connection. In other words, data may be transmitted between the MN and the SN. There is an NG interface between the MN and the 5GC. In this case, a connection between the MN and the 5GC may include at least a control plane connection. In other words, control signaling may be transmitted between the MN and the 5GC. Further, the connection between the MN and the 5GC may further include a user plane connection. In other words, data may be transmitted between the MN and the 5GC. There is an NG-U interface between the SN and the 5GC. In this case, the connection between the SN and the 5GC is a user plane connection. In other words, data may be transmitted between the SN and the 5GC.

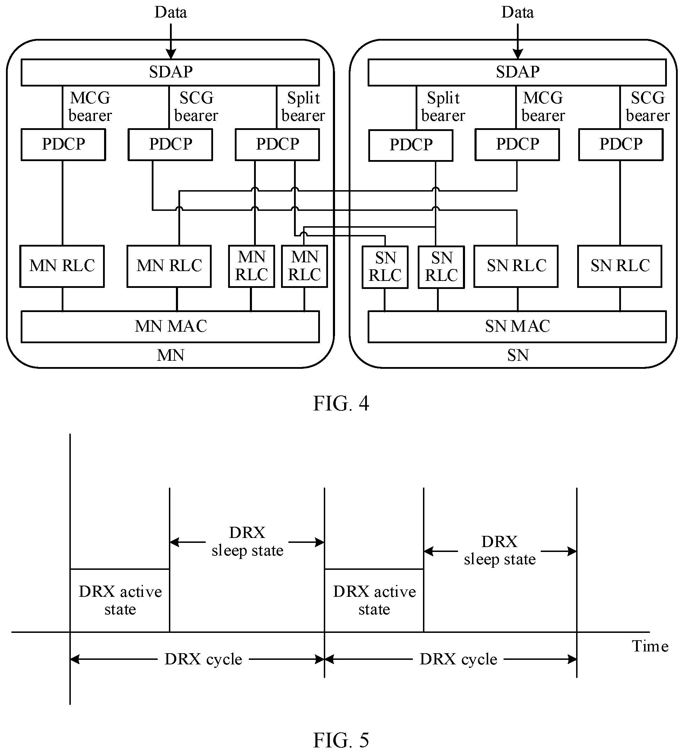

According to the radio interface protocol, the following plurality of bearer types may be supported in the MR-DC architecture. For example, as shown in FIG. 4, the following six bearer types may be included:

(1) MN terminated MCG bearer (MN terminated MCG bearer)
The MCG bearer represents a data bearer between the terminal device and the MN, that is, a bearer related to an MCG air interface resource. The MN terminated MCG bearer may be understood as that a base station that is in the DC and that has a user plane connection to a core network is the MN, and the MN routes data from the core network to a MAC entity of the MN through an RLC entity of the MN, so that the data is sent to the terminal device only through the MN. An MCG bearer in the MN shown in FIG. 4 is an example.
(2) MN terminated SCG bearer (MN terminated SCG bearer)
The SCG bearer represents a data bearer between the terminal device and the SN, that is, a bearer related to an SCG air interface resource. The MN terminated SCG bearer may be understood as that a base station that is in the DC and that has a user plane connection to a core network is the MN, and the MN routes data from the core network to a MAC entity of the SN through an RLC entity of the SN, so that the data is sent to the terminal device only through the SN. An SCG bearer in the MN shown in FIG. 4 is an example.

(3) MN terminated split bearer (MN terminated split bearer)

The split bearer represents a data bearer between the terminal device and the MN and between the terminal device and the SN, that is, a bearer related to an MCG air interface resource and an SCG air interface resource. The MN terminated split bearer may be understood as that a base station that is in the DC and that has a user plane connection to a core network is the MN, and the MN splits data from the core network, routes some data to a MAC entity of the MN through an RLC entity of the MN, and routes the other data to a MAC entity of the SN through an RLC entity of the SN, so that the data is sent to the terminal device through the MN and the SN. A split bearer in the MN shown in FIG. 4 is an example.

(4) SN terminated MCG bearer (SN terminated MCG bearer)

The SN terminated MCG bearer may be understood as that a base station that is in the DC and that has a user plane connection to a core network is the SN, and the SN routes data from the core network to a MAC entity of the MN through an RLC entity of the MN, so that the data is sent to the terminal device only through the MN. An MCG bearer in the SN shown in FIG. 4 is an example.

(5) SN terminated SCG bearer (SN terminated SCG bearer)

The SN terminated SCG bearer may be understood as that a base station that is in the DC and that has a user plane connection to a core network is the SN, and the SN routes data from the core network to a MAC entity of the SN through an RLC entity of the SN, so that the data is sent to the terminal device only through the SN. An SCG bearer in the SN shown in FIG. 4 is an example.

(6) SN terminated split bearer (SN terminated split bearer)

The SN terminated split bearer may be understood as that a base station that is in the DC and that has a user plane connection to a core network is the SN, and the SN splits data from the core network, routes some data to a MAC entity of the MN through an RLC entity of the MN, and routes the other data to a MAC entity of the SN through an RLC entity of the SN, so that the data is sent to the terminal device through the MN and the SN. A split bearer in the SN shown in FIG. 4 is an example.

4. Discontinuous reception (discontinuous reception, DRX)

Because a data flow is usually bursty, data is sent and/or received in a time period, but no data is sent and/or received in a next time period. Therefore, DRX is introduced, so that when there is no data sent and/or received, power consumption can be reduced by stopping reception (stopping performing blind detection), thereby prolonging battery use time.

In the NR system, the base station may configure DRX for the terminal device. As shown in FIG. 5, the terminal device configured with DRX turns on a receiver only in necessary time (a time period in which data is sent and/or received), and enters a DRX active state, to monitor a downlink control instruction from the base station, and turns off the receiver in other time (a time period in which no data is sent and/or received), and enters a DRX sleep state. In this way, the terminal device does not need to monitor and parse a physical downlink control channel (physical downlink control channel, PDCCH) between the terminal device and the base station at any time to determine whether the base station schedules a transmission resource for the terminal device, thereby reducing power consumption of the terminal device.

Optionally, the base station may dynamically indicate, by using a wake-up signal (wake-up signal, WUS), the terminal device to enter the DRX active state. For example, when detecting a WUS, the terminal device turns on the receiver in a next DRX cycle following a DRX cycle in which the WUS is detected, and enters the DRX active state. When the terminal device detects no WUS, the terminal device does not turn on the receiver in a next DRX cycle following a DRX cycle in which a detection moment is located. In other words, the terminal device is in the DRX sleep state in the next DRX cycle.

Currently, in the MR-DC architecture, to implement communication between the terminal device and two base stations, two MAC entities in the terminal device need to separately monitor, in real time, a PDCCH between the terminal device and a base station corresponding to the terminal device, to ensure that data transmission between the terminal device and the base station can be implemented.

However, a downlink XR service is used as an example. The XR service periodically arrives at the terminal device. Therefore, two MAC entities in the terminal device separately monitor, in real time, a PDCCH between the terminal device and a base station corresponding to the MAC entity, which causes extremely high power consumption, and shortens battery life of the terminal device and battery service life.

To improve the foregoing phenomenon, DRX is introduced into the MR-DC architecture. To be specific, two MAC entities of the terminal device only need to separately monitor, in a DRX active state, a PDCCH between the terminal device and a base station corresponding to the MAC entity, to reduce monitoring duration of the terminal device, and save energy for the terminal device.

However, a downlink XR service is used as an example. XR data may be delivered to the terminal device through an MCG, or XR data may be delivered to the terminal device through an SCG, or XR data may be delivered to the terminal device through an MCG and an SCG. To ensure that the base station can schedule data in time, both the two base stations need to be configured with a monitoring cycle that matches an arrival cycle of the XR service.

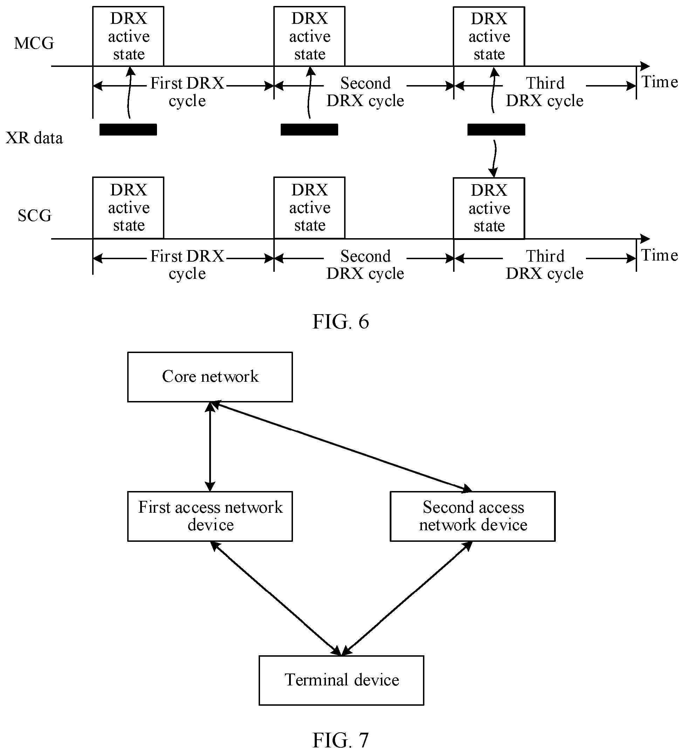

For example, as shown in FIG. 6, the XR data is delivered to the terminal device through the MCG in a first DRX cycle and a second DRX cycle, and the XR data is delivered to the terminal device through the MCG and the SCG in a third DRX cycle. In the first DRX cycle and the second DRX cycle, even if the XR data is not delivered through the SCG, a MAC entity that is in the terminal device and that corresponds to the SCG still needs to perform monitoring in a DRX active state in the first DRX cycle and the second DRX cycle. Therefore, in this solution, power of the terminal device is still consumed, thereby shortening battery life of the terminal device and battery service life.

Based on this, this application proposes a power saving method and an apparatus. A terminal device can completely or incompletely stop monitoring, based on a path through which first data is to be sent by the terminal device or a path through which first data is to be sent by a first access network device, a PDCCH on a path other than the path for the first data, to reduce energy consumption of the terminal device, and further improve battery life of the terminal device and battery service life.

The technical solutions provided in this application may be applied to various communication systems. The communication system may be a 3GPP communication system, for example, a 4G LTE system, a 5G NR system, a vehicle to everything (vehicle to everything, V2X) system, an LTE and NR hybrid networking system, a device-to-device (device-to-device, D2D) system, a machine-to-machine (machine-to-machine, M2M) communication system, an internet of things (Internet of Things, IoT), or another next-generation communication system. Alternatively, the communication system may be a non-3GPP communication system. This is not limited.

The foregoing communication systems applicable to this application are merely examples for description, and communication systems applicable to this application are not limited thereto. This is uniformly described herein. Details are not described below again.

FIG. 7 shows an example of a communication system according to this application. The communication system includes at least two access network devices and at least one terminal device. The at least two access network devices are connected to the at least one terminal device. In other words, the at least one terminal device is separately dual-connected to the at least two access network devices.

Optionally, different access network devices may communicate with each other.

As shown in FIG. 7, the terminal device is separately connected to a first access network device and a second access network device. Data from a core network may be sent to the terminal device through the first access network device and/or the second access network

work device. Alternatively, data from the terminal device may be sent to the core network through the first access network device and/or the second access network device.

Optionally, the access network device is a device that connects the terminal device to a wireless network, and may be an evolved NodeB (evolved NodeB, eNB or eNodeB) in an LTE or LTE-advanced (LTE-Advanced, LTE-A) system, for example, a conventional macro base station eNB and a micro base station eNB in a heterogeneous network scenario; or may be a next generation NodeB (next generation NodeB, gNodeB or gNB) in a 5G system; or may be a next generation base station in a 6G system; or may be a transmission reception point (transmission reception point, TRP); or may be a base station in a future evolved public land mobile network (public land mobile network, PLMN); or may be a broadband network gateway (broadband network gateway, BNG), an aggregation switch, or a non-3GPP access device; or may be a radio controller in a cloud radio access network (cloud radio access network, CRAN); or may be an access point (access point, AP) in a Wi-Fi system; or may be a wireless relay node or a wireless backhaul node; or may be a device for implementing a base station function in IoT, a device for implementing a base station function in V2X, a device for implementing a base station function in D2D, or a device for implementing a base station function in M2M. This is not specifically limited in embodiments of this application.

For example, the base station in embodiments of this application may include base stations in various forms, for example, a macro base station, a micro base station (also referred to as a small cell), an indoor base station, a relay station, an access point, and a donor node. This is not specifically limited in embodiments of this application.

Optionally, during specific implementation, the access network device may be a module or a unit that completes some functions of the base station, for example, a central unit (central unit, CU), or the access network device may include a CU and a distributed unit (distributed unit, DU). Division may be performed on the CU and the DU based on protocol layers of the wireless network. For example, functions of an RRC protocol layer, an SDAP layer, and a PDCP layer are set in the CU, and functions of an RLC layer, a MAC layer, and a PHY layer are set in the DU.

It may be understood that division into processing functions of the CU and the DU based on the protocol layers is merely an example, and division may alternatively be performed in another manner. This is not specifically limited in embodiments of this application.

In some embodiments, the CU may include a CU control plane (CU control plane, CU-CP) and a CU user plane (CU user plane, CU-UP).

Optionally, the terminal device may be a user side device having a wireless transceiver function, and may send a signal to the access network device, or receive a signal from the access network device. The terminal device may also be referred to as user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal may be widely used in various scenarios, for example, may be a wireless terminal in IoT, V2X, D2D, M2M, MTC, a 5G network, or a future evolved PLMN. The terminal device may be deployed on land, and includes an indoor device, an outdoor device, a handheld device, or a vehicle-mounted device; may be deployed on water (for example, on a ship); or may be deployed in air (for example, on a plane, a balloon, or a satellite).

For example, the terminal device may be an uncrewed aerial vehicle, a helicopter, a mechanical arm, an IoT device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device, another processing device connected to a wireless modem, a vehicle-mounted device, a wearable device (which may also be referred to as a wearable smart device), a tablet computer or a computer having a wireless transceiver function, an XR terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in smart home (smart home), a wireless device in a smart home (smart home control system, SCS), a wireless device in a smart office (office automation, OA), a vehicle-mounted terminal, a vehicle having a vehicle-to-vehicle (vehicle-to-vehicle, V2V) communication capability, an intelligent connected vehicle, or an uncrewed aerial vehicle having an uncrewed aerial vehicle to uncrewed aerial vehicle (UAV to UAV, U2U) communication capability. The terminal may be mobile or fixed. This is not specifically limited in this application.

In embodiments of this application, a function of the access network device may be performed by a module (for example, a chip) in the access network device, or may be performed by a control subsystem including the function of the access network device. The control subsystem including the function of the access network device may be a control center in the foregoing application scenarios, such as the smart grid, the industrial control, the smart transportation, and the smart city. A function of the terminal device may alternatively be performed by a module (for example, a chip or a modem) in the access network device, or may be performed by an apparatus including the function of the access network device.

The following describes the power saving method provided in embodiments of this application with reference to the accompanying drawings. It may be understood that in embodiments of this application, the access network device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

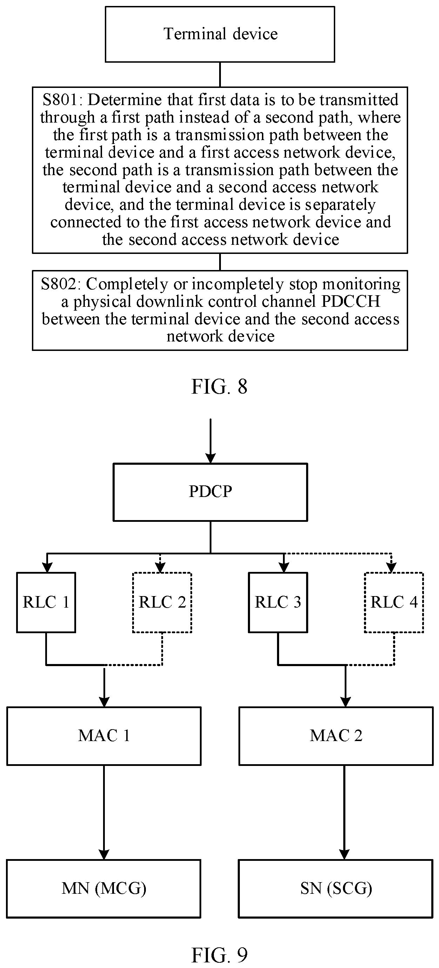

FIG. 8 shows a power saving method according to this application. The power saving method includes the following steps.

S801: A terminal device determines that first data is to be transmitted through a first path instead of a second path.

The first path is a transmission path between the terminal device and a first access network device, and the second path is a transmission path between the terminal device and a second access network device.

For example, the first data may be data of an XR service. Certainly, the data may alternatively be data of another type of service. This is not specifically limited in this application.

S802: The terminal device completely or incompletely stops monitoring a PDCCH between the terminal device and the second access network device.

Optionally, a first MAC entity of the terminal device may completely or incompletely stop monitoring the PDCCH between the terminal device and the second access network device. The first MAC entity is a MAC entity that is in the terminal device and that corresponds to the second path.

Optionally, that the first MAC entity completely or incompletely stops monitoring the PDCCH between the terminal device and the second access network device may also be understood as that the first MAC entity enters a sleep state.

Based on this solution, when determining that the first data is to be transmitted through the first path instead of the second path, the terminal device completely or incompletely stops monitoring the PDCCH between the terminal device and the second access network device. Compared with a case in which the terminal device keeps monitoring the PDCCH, this can reduce energy consumption of the terminal device, and further prolong battery life of the terminal device and battery service life.

The following describes steps S801 and S802 in detail.

For step S801:

Optionally, the first data may be uplink data, that is, a transmitter of the first data is the terminal device. Alternatively, the first data may be downlink data, that is, a receiver of the first data is the terminal device.

When the first data is uplink data:

In a possible implementation, the terminal device may independently determine that the first data is to be transmitted through the first path instead of the second path.

Optionally, a PDCP entity of the terminal device may determine that the first data is to be transmitted through the first path instead of the second path.

For example, a primary path (primary path) is configured on an MCG. As shown in FIG. 9, when data arrives at a PDCP layer of the terminal device, a PDCP entity may route the data to an RLC entity (an RLC 1 or an RLC 1 and an RLC 2 in FIG. 9) corresponding to the MCG and/or an RLC entity (an RLC 3 or an RLC 3 and an RLC 4 in FIG. 9) corresponding to an SCG. When the data is routed to the RLC entity corresponding to the MCG, it indicates that the first data is transmitted only through the path on which the MCG is located. In other words, the first data is transmitted only through the primary path. When the data is routed to the RLC entity corresponding to the SCG, it indicates that the first data is transmitted only through the path on which the SCG is located. In other words, the first data is transmitted only through the secondary path. When the data is separately routed to the RLC entity corresponding to the MCG and the RLC entity corresponding to the SCG, it indicates that the first data is transmitted through the path on which the MCG is located and the path on which the SCG is located. In other words, the first data is transmitted through the primary path and the secondary path.

Therefore, when the first data arrives at the PDCP entity, the PDCP entity may determine a path for the first data. The path for the first data may include that the first data is to be transmitted through the first path instead of the second path; or the first data is to be transmitted through the first path and the second path. The first path may be a primary path, and correspondingly, the second path is a secondary path. Alternatively, the first path may be a secondary path, and correspondingly, the second path is a primary path. For ease of description, the following uses an example in which the primary path is used as the first path and the secondary path is used as the second path for description.

The path for the first data may be determined according to a preset rule. For example, there may be the following six types of preset rules:

Rule 1: When the first data is not repeatedly sent (packet duplication is not performed) at the PDCP layer, and a data amount of the first data is less than a preset split threshold in a DC architecture, the PDCP entity routes the first data to the RLC entity corresponding to the MCG. Therefore, the first data is transmitted only through the path on which the MCG is located. In other words, the first data is to be transmitted through the first path instead of the second path.

For example, as shown in FIG. 9, the path corresponding to Rule 1 may be that the first data is transmitted from the PDCP layer to an RLC 1 layer, then transmitted to a MAC 1 layer, and then transmitted to an MN (MCG).

Rule 2: When the first data is not repeatedly sent (packet duplication is not performed) at the PDCP layer, and a data amount of the first data is less than a preset split threshold in a DC architecture, the PDCP entity routes the first data to the RLC entity corresponding to the SCG. Therefore, the first data is transmitted only through the path on which the SCG is located. In other words, the first data is to be transmitted through the second path instead of the first path.

Rule 3: When the first data is repeatedly sent at the PDCP layer (the PDCP entity replicates the first data and maps the first data to different RLC entities), the PDCP entity separately routes the data to the RLC entity corresponding to the MCG and the RLC entity corresponding to the SCG. Therefore, the first data is transmitted through the path on which the MCG is located and the path on which the SCG is located. In other words, the first data is transmitted through the first path and the second path.

For example, as shown in FIG. 9, the PDCP entity may make four copies of the first data, and a path corresponding to Rule 3 may be that the PDCP layer separately transmits the four copies of the same first data to an RLC 1 layer, an RLC 2 layer, an RLC 3 layer, and an RLC 4 layer. The first data at the RLC 1 layer and the RLC 2 layer is transmitted to a MAC 1 layer, and then transmitted to an MN (MCG). The first data at the RLC 3 layer and the RLC 4 layer is transmitted to a MAC 2 layer, and then transmitted to an SN (SCG).

Rule 4: When the first data is repeatedly sent at the PDCP layer (the PDCP entity replicates the first data and maps the first data to different RLC entities), the PDCP entity routes the data to the RLC entity corresponding to the MCG. Therefore, the first data is transmitted through the path on which the MCG is located. In other words, the first data is to be transmitted through the first path instead of the second path.

For example, as shown in FIG. 9, the PDCP entity may make two copies of the first data, and a path corresponding to Rule 4 may be that the PDCP layer separately transmits the two copies of the same first data to an RLC 1 layer and an RLC 2 layer. The first data at the RLC 1 layer and the RLC 2 layer is transmitted to a MAC 1 layer, and then transmitted to an MN (MCG).

Rule 5: When the first data is repeatedly sent at the PDCP layer (the PDCP entity replicates the first data and maps the first data to different RLC entities), the PDCP entity routes the data to the RLC entity corresponding to the SCG. Therefore, the first data is transmitted through the path on which the SCG is located. In other words, the first data is to be transmitted through the second path instead of the first path.

For example, as shown in FIG. 9, the PDCP entity may make two copies of the first data, and a path corresponding to Rule 5 may be that the PDCP layer separately transmits the two copies of the same first data to an RLC 3 layer and an RLC 4 layer. The first data at the RLC 3 layer and the RLC 4 layer is transmitted to a MAC 2 layer, and then transmitted to an SN (SCG).

Rule 6: When a data amount of the first data is greater than or equal to a preset split threshold in a DC architecture, the PDCP entity routes a part of the data to the RLC entity corresponding to the MCG, and routes the other part of the data to the RLC entity corresponding to the SCG. Therefore, the first data is transmitted through the path on which the MCG is located and the path on which the SCG is located. In other words, the first data is transmitted through the first path and the second path.

For example, as shown in FIG. 9, the PDCP entity may divide the first data into two parts. A path corresponding to Rule 6 may be that the PDCP layer transmits a part of the first data to an RLC 1 layer, and transmits the other part of the first data to an RLC 3 layer. The part of the first data at the RLC 1 layer is transmitted to a MAC 1 layer, and then transmitted to an MN (MCG). The other part of the first data at the RLC 3 layer is transmitted to a MAC 2 layer, and then transmitted to an SN (SCG).

When the first data is downlink data:

In a possible implementation, the terminal device may determine, based on first indication information from the first access network device, that the first data is to be transmitted through the first path instead of the second path. The first indication information indicates the terminal device to completely or incompletely stop monitoring the PDCCH between the terminal device and the second access network device.

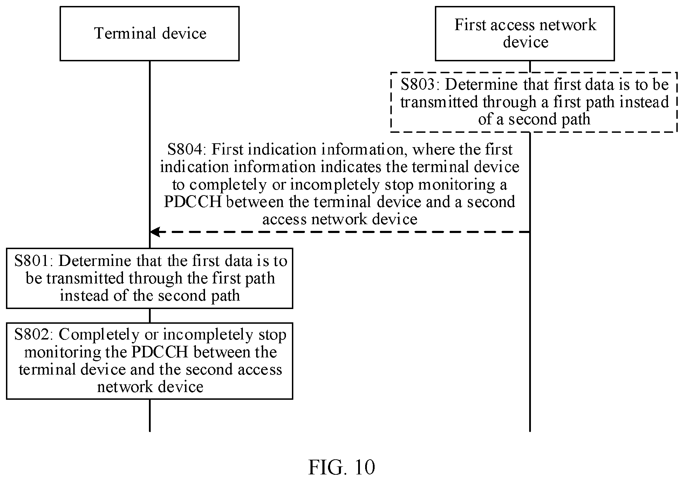

Optionally, in this possible implementation, as shown in FIG. 10, before step S801, the power saving method may further include steps S803 and S804.

S803: The first access network device determines that the first data is to be transmitted through the first path instead of the second path.

Optionally, a PDCP entity of the first access network device may determine that the first data is to be transmitted through the first path instead of the second path. For a manner in which the first access network device determines the path of the first data, refer to the manner in which the terminal device determines the path for the first data. Details are not described herein in this application.

S804: The first access network device sends the first indication information to the terminal device. Correspondingly, the terminal device receives the first indication information from the first access network device.

Optionally, in step S801, the terminal device may determine, based on the first indication information, that the first data is to be transmitted through the first path instead of the second path.

For example, after receiving the first indication information, the terminal device may determine that the first access network device indicates the terminal device to completely or incompletely stop monitoring the PDCCH between the terminal device and the second access network device. Therefore, the terminal device may consider that the second access network device does not participate in transmission of the first data, and thus may determine that the first data is to be transmitted through the first path instead of the second path.

In another possible implementation, the terminal device may determine, based on first indication information from the second access network device, that the first data is to be transmitted through the first path instead of the second path. The first indication information indicates the terminal device to completely or incompletely stop monitoring the PDCCH between the terminal device and the second access network device.

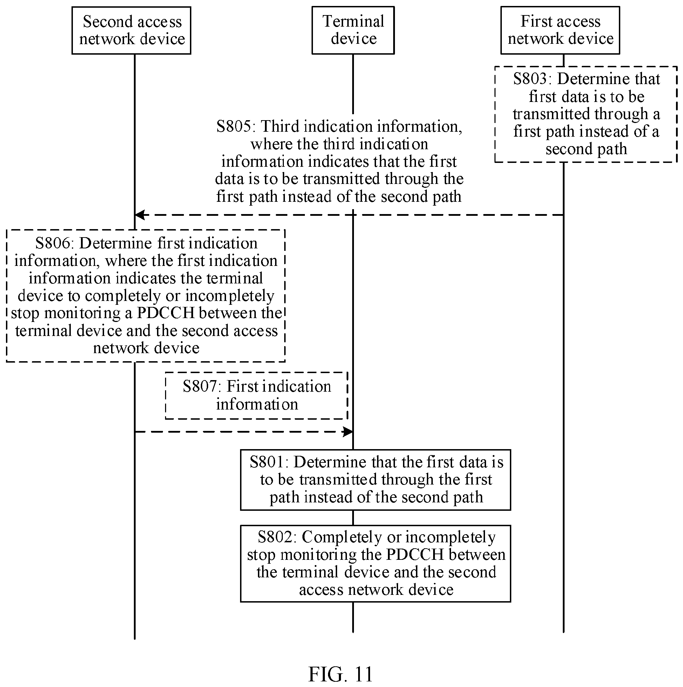

Optionally, in this possible implementation, as shown in FIG. 11, after step S803, the power saving method may further include steps S805 to S807.

S805: The first access network device sends third indication information to the second access network device. Correspondingly, the second access network device receives the third indication information from the first access network device. The third indication information indicates that the first data is to be transmitted through the first path instead of the second path.

Optionally, the first access network device may send the third indication information to the second access network device through a communication interface (an Xn interface or an X2 interface) between the first access network device and the second access network device. In this case, the third indication information may also be referred to as fourth indication information.

Optionally, the third indication information may be carried in an inter-station message between the first access network device and the second access network device. The inter-station message may be, for example, a node modification request (S-NODE MODIFICATION REQUEST) message or a node modification requirement (S-NODE MODIFICATION REQUIRED) message.

S806: The second access network device determines the first indication information.

Optionally, the second access network device may determine the first indication information based on the third indication information.

S807: The second access network device sends the first indication information to the terminal device. Correspondingly, the terminal device receives the first indication information from the second access network device.

Optionally, in step S801, the terminal device may determine, based on the first indication information, that the first data is to be transmitted through the first path instead of the second path. For details, refer to the related descriptions. Details are not described herein again.

For step S802:

The following describes how the terminal device completely or incompletely stops monitoring the PDCCH between the terminal device and the second access network device. For example, the terminal device may completely or incompletely stop monitoring the PDCCH between the terminal device and the second access network device in the following three possible implementations.

In a possible implementation, when the terminal device independently determines that the first data is to be transmitted through the first path instead of the second path, the terminal device may completely or incompletely stop monitoring the PDCCH between the terminal device and the second access network device.

For example, if the PDCP entity in the terminal device determines that the first data is to be transmitted through the first path instead of the second path, the PDCP entity sends fifth indication information to the first MAC entity. The first MAC entity completely or incompletely stops monitoring the PDCCH between the terminal device and the second access network device based on the fifth indication information. The fifth indication information may indicate the first MAC entity to completely or incompletely stop monitoring the PDCCH between the terminal device and the second access network device.

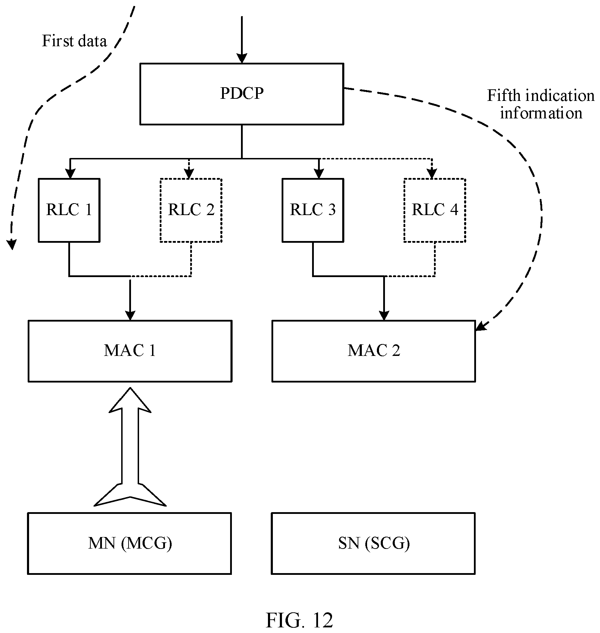

As shown in FIG. 12, for example, a MAC entity at a MAC 2 layer in FIG. 12 is used as the first MAC entity, and the first data is uplink data. The PDCP entity sends fifth indication information to the MAC entity at the MAC 2 layer, and the MAC entity at the MAC 2 layer completely or incompletely stops monitoring a PDCCH between the terminal device and an SN (SCG) based on the fifth indication information. In this case, a MAC entity at a MAC 1 layer continues to monitor a PDCCH between the terminal device and an MN (MCG).

Based on this solution, when the terminal device determines that the first data is to be transmitted through the first path instead of the second path, the terminal device may actively send the fifth indication information to the first MAC entity. After receiving the fifth indication information, the first MAC entity completely or incompletely stops monitoring the PDCCH between the terminal device and the second access network device. In this solution, the terminal device may independently determine the path for the first data without the assistance of the first access network device and/or the second access network device, and may actively completely or incompletely stop monitoring the PDCCH between the terminal device and the second access network device. This reduces interaction between a plurality of devices, simplifies implementation of the solution, and saves energy for the terminal device.

In another possible implementation, the terminal device may completely or incompletely stop monitoring the PDCCH between the terminal device and the second access network device based on first indication information from the first access network device.

For example, when the first access network device determines that the first data is to be transmitted through the first path instead of the second path, the first access network device may send the first indication information to the terminal device. The first MAC entity in the terminal device may determine, based on the first indication information from the first access network device, that the first data is to be transmitted through the first path instead of the second path, and completely or incompletely stops monitoring the PDCCH between the terminal device and the second access network device.

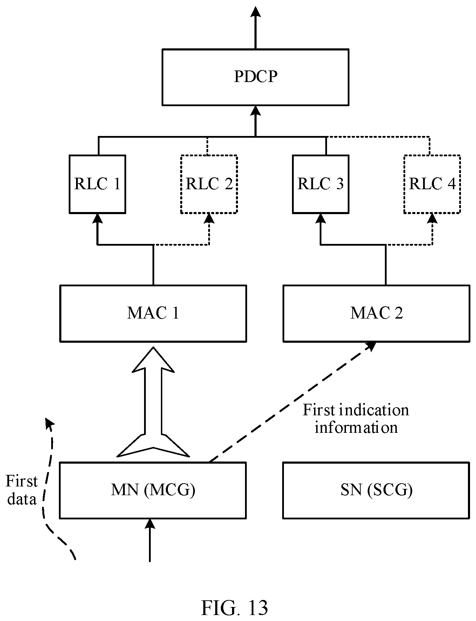

As shown in FIG. 13, for example, a MAC entity at a MAC 2 layer in FIG. 13 is used as the first MAC entity and the first data is downlink data. When determining that the first data is to be transmitted through the first path instead of the second path, an MN (MCG) may send first indication information to the MAC entity at the MAC 2 layer in the terminal device, and the MAC entity at the MAC 2 layer determines, based on the first indication information, that the first data is to be transmitted through the first path instead of the second path, and completely or incompletely stops monitoring a PDCCH between the terminal device and an SN (SCG). In this case, a MAC entity at a MAC 1 layer continues to monitor a PDCCH between the terminal device and the MN (MCG).

Optionally, the first indication information may be carried in at least one of downlink control information (downlink control information, DCI), a MAC control element (media access control-control element, MAC-CE), or an RRC message.

For example, second indication information may be represented by 1 bit. When a value of the 1 bit is a first value, it indicates that the second indication information indicates that the second access network device does not participate in transmission of the first data (in other words, the first data is transmitted through the first path instead of the second path, and in this case, the first data is transmitted through the first path). When a value of the 1 bit is a second value, it indicates that the second indication information indicates that the second access network device participates in transmission of the first data (in other words, the first data is transmitted through the second path instead of the first path). The first value may be 1, and correspondingly, the second value may be 0. Alternatively, the first value may be 0, and correspondingly, the second value may be 1.

Optionally, the first indication information may include an identifier (identifier, ID) of a cell group that is in the second access network device and that serves the terminal device, and/or duration for completely or incompletely stopping monitoring the PDCCH between the terminal device and the second access network device.

Optionally, in the duration for completely or incompletely stopping monitoring the PDCCH between the terminal device and the second access network device, the terminal device completely or incompletely stops monitoring the PDCCH between the terminal device and the second access network device.

For example, when a DRX mechanism is configured for the terminal device, the duration for completely or incompletely stopping monitoring the PDCCH between the terminal device and the second access network device may be at least one DRX cycle. In other words, in the at least one DRX cycle, the terminal device completely or incompletely stops monitoring the PDCCH between the terminal device and the second access network device.

Optionally, the ID of the cell group that is in the second access network device and that serves the terminal device may indicate that the cell group does not participate in transmission of the first data; or the ID of the cell group that is in the second access network device and that serves the terminal device may indicate that the cell group is in an idle state in a transmission process of the first data.

Optionally, the duration for completely or incompletely stopping monitoring the PDCCH between the terminal device and the second access network device may indicate duration in which the second access network device does not participate in data transmission. The data includes the first data.

Optionally, when a service corresponding to the first data periodically arrives at a receive side, the duration for completely or incompletely stopping monitoring the PDCCH between the terminal device and the second access network device may be one or more data arrival cycles.

For example, when a DXR mechanism is configured for the terminal device, the duration for completely or incompletely stopping monitoring the PDCCH may be one or more DRX cycles.

Optionally, the duration for completely or incompletely stopping monitoring the PDCCH between the terminal device and the second access network device may be predefined by at least one of a protocol, the terminal device, or the first access network device.

Based on this optional solution, when the first access network device determines that the first data is to be transmitted through the first path instead of the second path, the first access network device may notify the terminal device by using the first indication information, so that the terminal device can completely or incompletely stop monitoring the PDCCH between the terminal device and the second access network device based on the first indication information, thereby saving energy for the terminal device.

In still another possible implementation, the terminal device may determine, based on first indication information from the second access network device, to completely or incompletely stop monitoring the PDCCH between the terminal device and the second access network device.

Optionally, when the first data is downlink data, the first indication information may be determined based on the third indication information sent by the first access network device. Alternatively, when the first data is uplink data, the first indication information may be determined based on second indication information. The second indication information may be sent by the terminal device to the second access network device, or the second indication information may be sent by the terminal device to the first access network device, and then forwarded by the first access network device to the second access network device.

When the first indication information is determined by the third indication information sent by the first access network device:

Optionally, the first access network device determines that the first data is to be transmitted through the first path instead of the second path, and sends the third indication information to the second access network device. The second access network device determines the first indication information based on the third indication information, and sends the first indication information to the terminal device. The first MAC entity in the terminal device determines, based on the first information, that the first data is to be transmitted through the first path instead of the second path, and then completely or incompletely stops monitoring the PDCCH between the terminal device and the second access network device. The first indication information of the second access network device is determined based on the third indication information sent by a first access network to the second access network device.

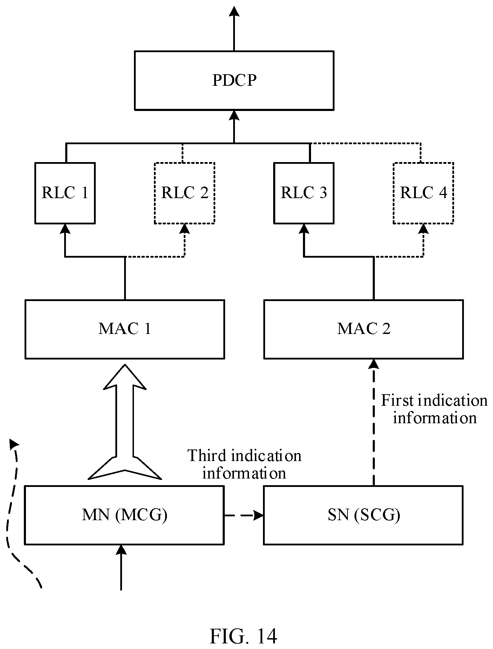

As shown in FIG. 14, for example, a MAC entity at a MAC 2 layer in FIG. 14 is used as the first MAC entity, and the first data is downlink data. When determining that the first data is to be transmitted through the first path instead of the second path, an MN (MCG) may send third indication information to an SN (SCG), and the SN (SCG) may determine first indication information based on the third indication information, a data transmission status of the SN (SCG), configuration information, and the like, and send the first indication information to the MAC entity at the MAC 2 layer in the terminal device. The MAC entity at the MAC 2 layer determines, based on the first indication information, that the first data is to be transmitted through the first path instead of the second path, and completely or incompletely stops monitoring a PDCCH between the terminal device and the SN (SCG). In this case, a MAC entity at a MAC 1 layer continues to monitor a PDCCH between the terminal device and the MN (MCG).

Optionally, when the DRX mechanism is configured for the terminal device, the first indication information sent by the second access network device to the terminal device may include a WUS, and the WUS may indicate the first MAC entity not to enter a DRX active state in a next DRX cycle of a current moment. In other words, the first MAC entity completely or incompletely stops monitoring the PDCCH between the terminal device and the second access network device in the next DRX cycle. Alternatively, the first indication information may include a PDCCH skipping (skipping) instruction, and the PDCCH skipping instruction instructs the first MAC entity to completely or incompletely stop monitoring the PDCCH between the terminal device and the second access network device within time indicated by the PDCCH skipping instruction. The PDCCH skipping instruction includes skipping duration.

Based on this optional solution, when the first access network device determines that the first data is to be transmitted through the first path instead of the second path, the first access network device may notify the second access network device by using the third indication information, so that the second access network device learns that the first data is to be transmitted through the first path instead of the second path. This avoids a waste of resources caused by sending control information to the terminal device in a time period in which the first MAC entity completely or incompletely stops monitoring the PDCCH between the terminal device and the second access network device. In addition, the second access network device determines the first indication information based on the third indication information, a data transmission status of the second access network device, configuration information, and the like, so that the terminal device can completely or incompletely stop monitoring the PDCCH between the terminal device and the second access network device based on the first indication information. Compared with a case in which the first access network device determines the first indication information, this can avoid a phenomenon that information is missed due to a determining error of the first access network device.

When the second indication information is sent by the terminal device to the second access network device:

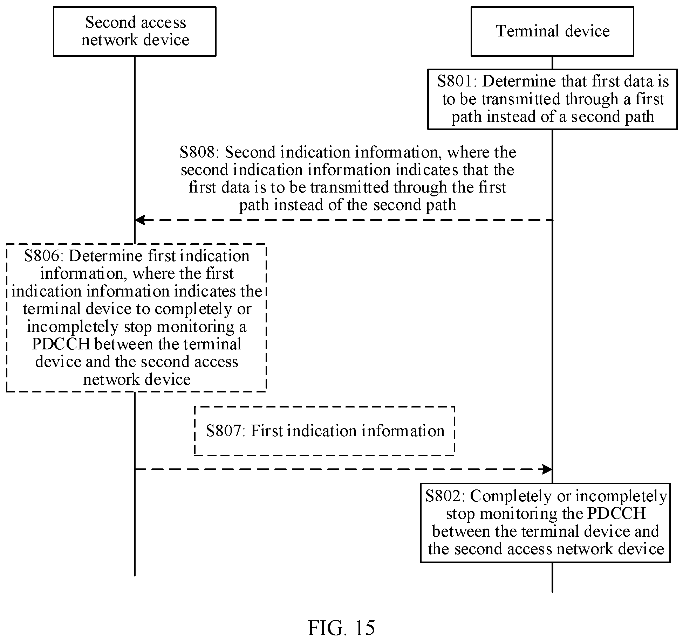

Optionally, as shown in FIG. 15, after step S801, the power saving method may further include step S808.

S808: The terminal device sends the second indication information to the second access network device. Correspondingly, the second access network device receives the second indication information from the terminal device. The second indication information indicates that the first data is to be transmitted through the first path instead of the second path. In this case, the second indication information may also be referred to as fourth indication information.

Optionally, after determining, based on the second indication information, that the first data is to be transmitted through the first path instead of the second path, the second access network device may perform steps S806 and S807. The first indication information is determined based on the second indication information.

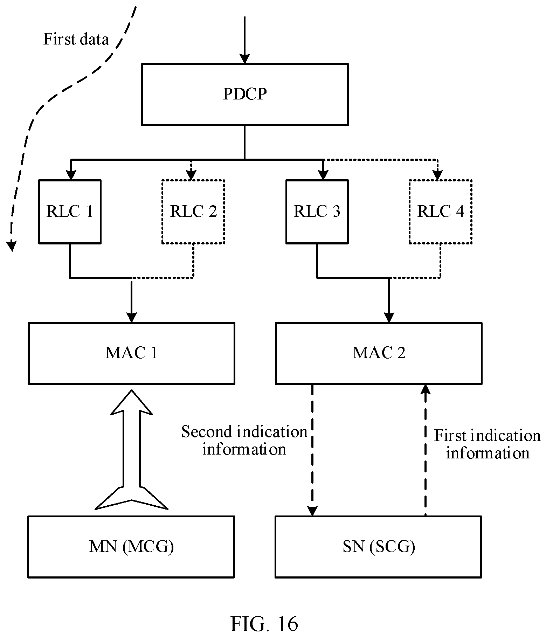

For example, as shown in FIG. 16, a MAC entity at a MAC 2 layer in FIG. 16 is used as the first MAC entity. When the terminal device determines that the first data is to be transmitted through the first path instead of the second path, the MAC entity at the MAC 2 layer in the terminal device may send second indication information to an SN (SCG), and the SN (SCG) may determine first indication information based on the second indication information, a data transmission status of the SN (SCG), configuration information, and the like, and sends the first indication information to the MAC entity at the MAC 2 layer. The MAC entity at the MAC 2 layer completely or incompletely stops monitoring a PDCCH between the terminal device and the SN (SCG) based on the first indication information. In this case, a MAC entity at a MAC 1 layer continues to monitor a PDCCH between the terminal device and the MN (MCG).

Optionally, the second indication information may be carried in uplink control information (uplink control information, UCI) or a MAC-CE.

Optionally, the second indication information may be represented by 1 bit. Refer to the related descriptions of the first indication information. Details are not described herein again.

Optionally, the second indication information may include an ID of a cell group that is in the second access network device and that serves the terminal device, and/or duration for completely or incompletely stopping monitoring the PDCCH between the terminal device and the second access network device.

Based on this optional solution, when the terminal device determines that the first data is to be transmitted through the first path instead of the second path, the terminal device may notify the second access network device by using the second indication information, so that the second access network device learns that the first data is to be transmitted through the first path instead of the second path. In this way, this avoids a waste of resources caused by sending control information to the terminal device in a time period in which the first MAC entity completely or incompletely stops monitoring the PDCCH between the terminal device and the second access network device. In addition, the second access network device determines the first indication information based on the second indication information, a data transmission status of the second access network device, configuration information, and the like, so that the terminal device can completely or incompletely stop monitoring the PDCCH between the terminal device and the second access network device based on the first indication information. Compared with a case in which the terminal device independently determines that the first data is to be transmitted through the first path instead of the second path, this can avoid a phenomenon that information is missed due to a determining error of the terminal device.

When the second indication information is sent by the terminal device to the first access network device, and then forwarded by the first access network device to the second access network device:

Optionally, the second indication information forwarded to the second access network device may be referred to as third indication information, and the third indication information indicates that the first data is to be transmitted through the first path instead of the second path.

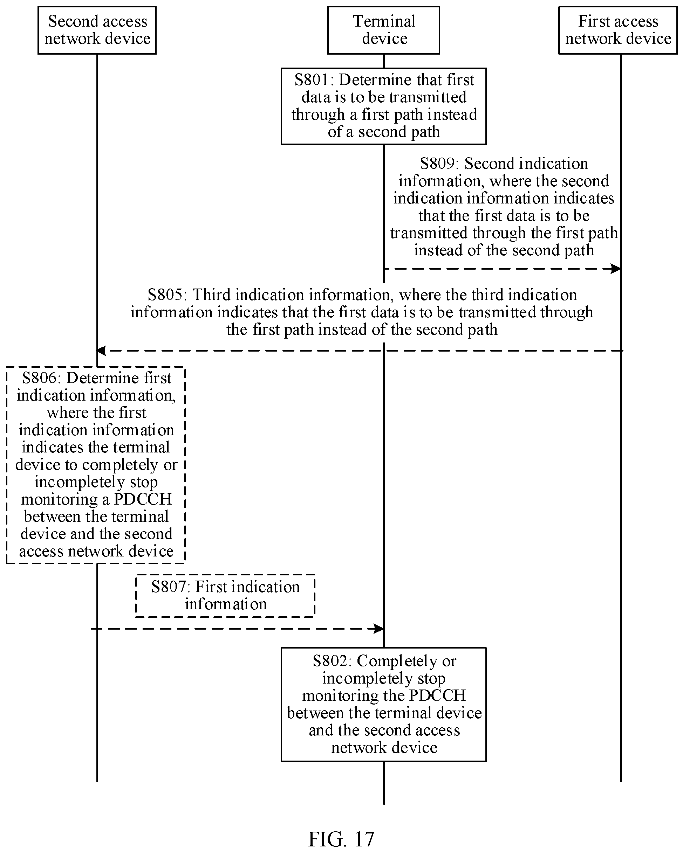

Optionally, as shown in FIG. 17, after step S801, the power saving method may further include step S809.

S809: The terminal device sends the second indication information to the first access network device. Correspondingly, the first access network device receives the second indication information from the terminal device.

Optionally, after determining, based on the second indication information, that the first data is to be transmitted through the first path instead of the second path, the first access network device may perform steps S805 to S807. The third indication information is the second indication information forwarded by the first access network device.

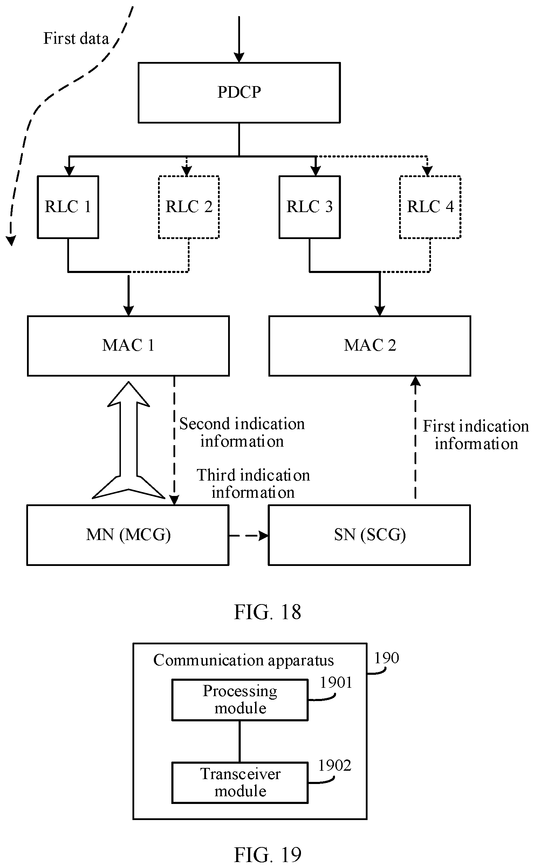

For example, as shown in FIG. 18, a MAC entity at a MAC 2 layer in FIG. 18 is used as the first MAC entity. When the terminal device determines that the first data is to be transmitted through the first path instead of the second path, a MAC entity at a MAC 1 layer in the terminal device may send second indication information to an MN (MCG), and the MN (MCG) may send third indication information to an SN (SCG). In this case, the third indication information is the forwarded second indication information. The SN (SCG) may determine the first indication information based on the third indication information, a data transmission status of the SN (SCG), configuration information, and the like, and send the first indication information to the MAC entity at the MAC 2 layer in the terminal device. The MAC entity at the MAC 2 layer completely or incompletely stops monitoring a PDCCH between the terminal device and the SN (SCG) based on the first indication information. In this case, the MAC entity at the MAC 1 layer continues to monitor a PDCCH between the terminal device and the MN (MCG).

Optionally, the third indication information may be represented by 1 bit. Refer to the related descriptions of the first indication information. Details are not described herein again.

Optionally, the third indication information may include an ID of a cell group that is in the second access network device and that serves the terminal device, and/or duration for completely or incompletely stopping monitoring the PDCCH.

Based on this optional solution, when determining that the first data is to be transmitted through the first path instead of the second path, the terminal device may notify the first access network device by using the second indication information, and then the first access network device notifies the second access network device, so that the second access network device learns that the first data is to be transmitted through the first path instead of the second path. In addition, because the first data is to be transmitted through the first path instead of the second path, information transmission definitely exists between the first access network device and the terminal device, and message transmission does not necessarily exist between the second access network device and the terminal device. Therefore, if the terminal device directly sends the second indication information to the second access network device, there may be no uplink resource used by the second access network device. In this case, the terminal device needs to first request an uplink resource from the second access network device, and then send the second indication information after obtaining the uplink resource. This reduces energy saving efficiency. However, the second indication information is carried in the information sent to the first access network device, and the third indication information is carried in the information sent to the second access network device, so that resources can be saved.

Optionally, completely or incompletely stopping monitoring the PDCCH between the terminal device and the second access network device may be implemented in the following four manners:

In a first possible implementation, incompletely stopping monitoring the PDCCH between the terminal device and the second access network device includes: stopping monitoring downlink control information that is transmitted through the PDCCH between the terminal device and the second access network device and that is scrambled by using a preset scrambling identifier.

For example, the preset scrambling identifier includes but is not limited to a cell radio network temporary identifier (cell radio network temporary identifier, C-RNTI), a cancellation indication (cancellation indication, CI)-RNTI, a configured scheduling (configured scheduling, CS) RNTI, an interruption (interruption, INT)-RNTI, a slot format indication (slot format indication, SF) RNTI, semi-permanent (semi-persistent, SP)-channel state information (channel state information, CSI)-RNTI, a transmit power control (transmit power control, TPC)-physical uplink control channel (physical uplink control channel, PUCCH)-RNTI, a TPC-physical uplink shared channel (physical uplink shared channel, PUSCH)-RNTI, and a TPC-sounding reference signal (sounding reference signal, SRS)-RNTI.

In a second possible implementation, incompletely stopping monitoring the PDCCH between the terminal device and the second access network device includes: The terminal device monitors the PDCCH between the terminal device and the second access network device based on a first cycle, and/or the terminal device monitors the PDCCH between the terminal device and the second access network device in first duration. The first cycle is greater than an original monitoring cycle of the PDCCH, and the first duration is less than original monitoring duration of the PDCCH.

Optionally, the original monitoring cycle may be understood as a monitoring cycle in which the terminal device monitors the PDCCH between the terminal device and the second access network device before step S801 is performed. The original monitoring duration may be understood as duration in which the terminal device keeps monitoring the PDCCH between the terminal device and the second access network device in a monitoring cycle before step S801 is performed.

For example, when the DRX mechanism is configured for the terminal device, the original monitoring cycle may be the DRX cycle shown in FIG. 5, and the original monitoring duration may be duration corresponding to the DRX active state shown in FIG. 5.

Optionally, the duration for completely or incompletely stopping monitoring the PDCCH between the terminal device and the second access network device may be at least one first cycle. In other words, in the at least one first cycle, the terminal device completely or incompletely stops monitoring the PDCCH between the terminal device and the second access network device.

Alternatively, the duration for completely or incompletely stopping monitoring the PDCCH between the terminal device and the second access network device may be at least one first duration. In other words, in a time period of the at least one first duration, the terminal device completely or incompletely stops monitoring the PDCCH between the terminal device and the second access network device.

In a third possible implementation, completely or incompletely stopping monitoring the PDCCH between the terminal device and the second access network device includes: When there is no to-be-transmitted data in the first MAC entity and/or an RLC entity associated with the first MAC entity, the terminal device completely or incompletely stops monitoring the PDCCH between the terminal device and the second access network device.

For example, as shown in FIG. 9, a MAC entity at the MAC 2 layer in FIG. 9 is used as the first MAC entity, and the radio link control RLC entity associated with the first MAC entity may be an RLC entity at the RLC 3 layer and an RLC entity at the RLC 4 layer.

Optionally, in the third possible implementation, before monitoring the PDCCH between the terminal device and the second access network device is completely or incompletely stopped, if there is to-be-transmitted data in the first MAC entity and/or the RLC entity, the terminal device sends the to-be-transmitted data to the second access network device. Correspondingly, the second access network device receives the to-be-transmitted data from the terminal device. In other words, the first MAC entity does not enter a sleep state before completing transmission of the to-be-transmitted data.

In a fourth possible implementation, completely or incompletely stopping monitoring the PDCCH includes: When a radio bearer associated with the first MAC entity does not include a first radio bearer, the terminal device completely or incompletely stops monitoring the PDCCH between the terminal device and the second access network device. The first radio bearer is a radio bearer corresponding to a first service, the first service is a service other than a service corresponding to first data in services corresponding to the first MAC entity, and the radio bearer includes at least one of a signaling radio bearer (signaling radio bearer, SRB) or a data radio bearer (data radio bearer, DRB).

It may be understood that, in the foregoing embodiments, the methods and/or the steps implemented by the access network device may alternatively be implemented by a component (for example, a processor, a chip, a chip system, a circuit, a logical module, or software like a chip or a circuit) that can be used in the access network device; or the methods and/or the steps implemented by the terminal device may alternatively be implemented by a component (for example, a processor, a chip, a chip system, a circuit, a logical module, or software like a chip or a circuit) that can be used in the terminal device.

The foregoing mainly describes the solutions provided in this application. Correspondingly, this application further provides a communication apparatus. The communication apparatus is configured to implement the foregoing methods. The communication apparatus may be the terminal device in the foregoing method embodiments, an apparatus including the terminal device, or a component that can be used in the terminal device, for example, a chip or a chip system. Alternatively, the communication apparatus may be the access network device in the foregoing method embodiments, an apparatus including the access network device, or a component that can be used in the access network device, for example, a chip or a chip system.

It may be understood that, to implement the foregoing functions, the communication apparatus includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely logical function division. During actual implementation, another division manner may be used.

FIG. 19 of a communication apparatus is a diagram of a structure of a communication apparatus 190. The communication apparatus 190 includes a processing module 1901 and a transceiver module 1902. The communication apparatus 190 may be configured to implement a function of the access network device or the terminal device.

In some embodiments, the communication apparatus 190 may further include a storage module (which is not shown in FIG. 19), configured to store program instructions and data.

In some embodiments, the transceiver module 1902 may also be referred to as a transceiver unit, configured to implement a sending function and/or a receiving function. The transceiver module 1902 may include a transceiver circuit, a transceiver machine, a transceiver, or a communication interface.

In some embodiments, the transceiver module 1902 may include a receiving module and a sending module, respectively configured to perform receiving steps and sending steps performed by the access network device or the terminal device in the foregoing method embodiments, and/or configured to support another process of the technology described in this specification. The processing module 1901 may be configured to perform processing (for example, determining and generating) steps performed by the access network device or the terminal device in the foregoing method embodiments, and/or configured to support another process of the technology described in this specification.

When the communication apparatus 190 is configured to implement a function of the terminal device: In some embodiments, the processing module 1901 is configured to determine that first data is to be transmitted through a first path instead of a second path. The first path is a transmission path between the terminal device and a first access network device, the second path is a transmission path between the terminal device and a second access network device, and the terminal device is separately connected to the first access network device and the second access network device. The processing module 1901 is further configured to control the transceiver module 1902 to completely or incompletely stop monitoring a PDCCH between the terminal device and the second access network device.

Optionally, the processing module 1901 is further configured to control the transceiver module 1902 to stop monitoring downlink control information that is transmitted through the PDCCH and that is scrambled by using a preset scrambling identifier.

Optionally, the processing module 1901 is further configured to control the transceiver module 1902 to: monitor the PDCCH based on a first cycle, where the first cycle is greater than an original monitoring cycle of the PDCCH; and/or monitor the PDCCH in first duration, where the first duration is less than original monitoring duration of the PDCCH.

Optionally, the processing module 1901 is further configured to: completely or incompletely stop monitoring, by a first MAC entity, the PDCCH, where the first MAC entity is a MAC entity that is in the terminal device and that corresponds to the second path.

Optionally, when there is no to-be-transmitted data in the first MAC entity and/or an RLC entity associated with the first MAC entity, the processing module 1901 is further configured to control the transceiver module 1902 to completely or incompletely stop monitoring the PDCCH.

Optionally, when there is to-be-transmitted data in the first MAC entity and/or the RLC entity, the transceiver module 1902 is configured to send the to-be-transmitted data to the second access network device.

Optionally, when a radio bearer associated with the first MAC entity does not include a first radio bearer, the processing module 1901 is configured to control the transceiver module 1902 to completely or incompletely stop monitoring the PDCCH. The first radio bearer is a radio bearer corresponding to a first service, the first service is a service other than a service corresponding to first data in services corresponding to the first MAC entity, and the radio bearer includes at least one of an SRB or a DRB.

Optionally, the processing module 1901 is further configured to control the transceiver module 1902 to obtain first indication information, where the first indication information indicates to completely or incompletely stop monitoring the PDCCH.

Optionally, the transceiver module 1902 is further configured to send second indication information to the first access network device and/or the second access network device, where the second indication information indicates that the first data is to be transmitted through the first path instead of the second path. The transceiver module 1902 is further configured to receive the first indication information from the first access network device and/or the second access network device.

Optionally, the second indication information includes an identifier ID of a cell group that is in the second access network device and that serves the terminal device, and/or duration for completely or incompletely stopping monitoring the PDCCH.

When the communication apparatus 190 is configured to implement a function of the first access network device:

In some embodiments, the processing module 1901 is configured to determine that first data is to be transmitted through a first path instead of a second path, where the first path is a transmission path between a terminal device and the first access network device, the second path is a transmission path between the terminal device and a second access network device, and the terminal device is separately connected to the first access network device and the second access network device.

The transceiver module 1902 is configured to send first indication information to the terminal device, or send third indication information to the second access network device, where the first indication information indicates the terminal device to completely or incompletely stop monitoring a PDCCH between the terminal device and the second access network device, and the third indication information indicates that the first data is to be transmitted through the first path instead of the second path.

Optionally, the transceiver module 1902 is further configured to receive second indication information from the terminal device, where the second indication information indicates that the first data is to be transmitted through the first path instead of the second path. The processing module 1901 is configured to determine, based on the second indication information, that the first data is to be transmitted through the first path instead of the second path.

Optionally, the second indication information includes an identifier ID of a cell group that is in the second access network device and that serves the terminal device, and/or duration for completely or incompletely stopping monitoring the PDCCH.

All related content of the steps in the foregoing method embodiments may be cited in function descriptions of the corresponding functional modules. Details are not described herein again.

When the communication apparatus 190 is configured to implement a function of the second access network device:

In some embodiments, the processing module 1901 is configured to control the transceiver module 1902 to receive fourth indication information from a terminal device or a first access network device, where the fourth indication information indicates that first data is to be transmitted through a first path instead of a second path, the first path is a transmission path between the terminal device and the first access network device, the second path is a transmission path between the terminal device and the second access network device, and the terminal device is separately connected to the first access network device and the second access network device.

The processing module 1901 is further configured to control the transceiver module 1902 to send first indication information to the terminal device, where the first indication information indicates the terminal device to completely or incompletely stop monitoring a PDCCH between the terminal device and the second access network device.

Optionally, the fourth indication information includes an identifier ID of a cell group that is in the second access network device and that serves the terminal device, and/or duration for completely or incompletely stopping monitoring the PDCCH.

All related content of the steps in the foregoing method embodiments may be cited in function descriptions of the corresponding functional modules. Details are not described herein again.

In this application, the communication apparatus 190 is presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 190 in FIG. 19 is a chip or a chip system, a function/an implementation process of the transceiver module 1902 may be implemented by using an input/output interface (or a communication interface) of the chip or the chip system, and a function/an implementation process of the processing module 1901 may be implemented by using a processor (or a processing circuit) of the chip or the chip system.

The communication apparatus 190 provided in this embodiment may perform the foregoing methods. Therefore, for technical effects that can be achieved by the communication apparatus 190, refer to the foregoing method embodiments. Details are not described herein again.

In a possible product form, the access network device or the terminal device in embodiments of this application may be implemented by using one or more field programmable gate arrays (field programmable gate arrays, FPGAs), a programmable logic device (programmable logic device, PLD), a controller, a state machine, gate logic, a discrete hardware component, any other appropriate circuit, or any combination of circuits that can perform various functions described in this application.

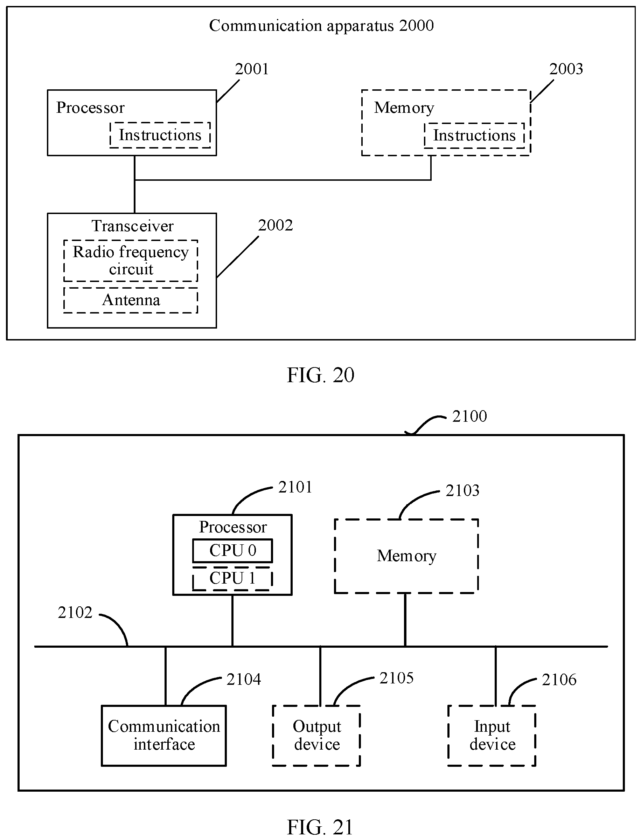

In another possible product form, the access network device or the terminal device in embodiments of this application may be implemented by using a general bus architecture. For ease of description, refer to FIG. 20.

FIG. 20 is a diagram of a structure of a communication apparatus 2000 according to an embodiment of this application. The communication apparatus 2000 includes a processor 2001 and a transceiver 2002. The communication apparatus 2000 may be a terminal device, or a chip or a chip system in the terminal device. Alternatively, the communication apparatus 2000 may be an access network device, or a chip or a module in the access network device. FIG. 20 shows only main components of the communication apparatus 2000. In addition to the processor 2001 and the transceiver 2002, the communication apparatus may further include a memory 2003 and an input/output apparatus (which is not shown in FIG. 20).

Optionally, the processor 2001 is mainly configured to: process a communication protocol and communication data, control the entire communication apparatus, execute a software program, and process data of the software program. The memory 2003 is mainly configured to store the software program and the data. The transceiver 2002 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user.

Optionally, the processor 2001, the transceiver 2002, and the memory 2003 may be connected through a communication bus.

After the communication apparatus is powered on, the processor 2001 may read the software program in the memory 2003, interpret and execute instructions of the software program, and process the data of the software program. When data needs to be sent in a wireless manner, the processor 2001 performs baseband processing on the to-be-sent data, and then outputs a baseband signal to a radio frequency circuit. The radio frequency circuit performs radio frequency processing on the baseband signal, and then sends, through the antenna, a radio frequency signal in a form of an electromagnetic wave. When data is sent to the communication apparatus, the radio frequency circuit receives a radio frequency signal through the antenna, converts the radio frequency signal into a baseband signal, and outputs the baseband signal to the processor 2001. The processor 2001 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

In some embodiments, in hardware implementation, a person skilled in the art may figure out that the communication apparatus 190 may be in a form of the communication apparatus 2000 shown in FIG. 20.

In an example, the function/implementation process of the processing module 1901 in FIG. 19 may be implemented by the processor 2001 in the communication apparatus 2000 shown in FIG. 20 by invoking computer-executable instructions stored in the memory 2003. The function/implementation process of the transceiver module 1902 in FIG. 19 may be implemented by the transceiver 2002 in the communication apparatus 2000 shown in FIG. 20.

In still another possible product form, the access network device or the terminal device in this application may use a composition structure shown in FIG. 21, or include components shown in FIG. 21. FIG. 21 is a diagram of composition of a communication apparatus 2100 according to this application. The communication apparatus 2100 may be a terminal device, or a chip or a system on chip in the terminal device, or may be an access network device, or a module, a chip, or a system on chip in the access network device.

As shown in FIG. 21, the communication apparatus 2100 includes at least one processor 2101 and at least one communication interface (in FIG. 21, only an example in which one communication interface 2104 and one processor 2101 are included is used for description). Optionally, the communication apparatus 2100 may further include a communication bus 2102 and a memory 2103.

The processor 2101 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 2101 may be another apparatus having a processing function, for example, a circuit, a component, or a software module. This is not limited.

The communication bus 2102 is configured to connect different components in the communication apparatus 2100, so that the different components can communicate with each other. The communication bus 2102 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 21, but this does not indicate that there is only one bus or only one type of bus.

The communication interface 2104 is configured to communicate with another device or a communication network. For example, the communication interface 2104 may be a module, a circuit, a transceiver, or any apparatus that can implement communication. Optionally, the communication interface 2104 may alternatively be an input/output interface located in the processor 2101, and is configured to implement signal input and signal output of the processor.

The memory 2103 may be an apparatus having a storage function, and is configured to store instructions and/or data. The instructions may be a computer program.

For example, the memory 2103 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital universal optical disc, a Blu-ray optical disc, and the like), a magnetic disk storage medium or another magnetic storage device, or the like. This is not limited.

It should be noted that the memory 2103 may be independent of the processor 2101, or may be integrated with the processor 2101. The memory 2103 may be located inside the communication apparatus 2100, or may be located outside the communication apparatus 2100. This is not limited. The processor 2101 may be configured to execute the instructions stored in the memory 2103, to implement a method provided in the following embodiments of this application.

In an optional implementation, the communication apparatus 2100 may further include an output device 2105 and an input device 2106. The output device 2105 communicates with the processor 2101, and may display information in a plurality of manners. For example, the output device 2105 may be a liquid crystal display (liquid crystal display, LCD), a light emitting diode (light emitting diode, LED) display device, a cathode ray tube (cathode ray tube, CRT) display device, a projector (projector), or the like. The input device 2106 communicates with the processor 2101, and may receive an input from a user in a plurality of manners. For example, the input device 2106 may be a mouse, a keyboard, a touchscreen device, or a sensor device.

In some embodiments, in hardware implementation, a person skilled in the art may figure out that the communication apparatus 190 may be in a form of the communication apparatus 2100 shown in FIG. 21.

In an example, the function/implementation process of the processing module 1901 in FIG. 19 may be implemented by the processor 2101 in the communication apparatus 2100 shown in FIG. 21 by invoking computer-executable instructions stored in the memory 2103. The function/implementation process of the transceiver module 1902 in FIG. 19 may be implemented by the communication interface 2104 in the communication apparatus 2100 shown in FIG. 21.

It should be noted that the structure shown in FIG. 21 does not constitute a specific limitation on the access network device or the terminal device. For example, in some other embodiments of this application, the access network device or the terminal device may include more or fewer components than those shown in the figure, or may combine some components, or may split some components, or may have different component arrangements. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read through another component), and transmit the computer-executable instructions to the processor.

In still another possible implementation, the communication apparatus further includes a communication interface, and the communication interface is configured to communicate with a module outside the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores computer programs or instructions. When the computer programs or instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatus, and unit, refer to a corresponding process in the foregoing method embodiments. Details are not described herein again.

It may be understood that the system, apparatus, and method described in this application may alternatively be implemented in another manner. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be physically separated or not, that is, may be located in one position, or may be distributed on a plurality of network units. Parts displayed as units may or may not be physical units. Some or all of the units may be selected based on actual requirements to achieve the objectives of the solutions of embodiments.

In addition, functional units in embodiments of this application may be integrated into one processing unit, or each unit may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedures or the functions in embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, the specification and accompanying drawings are merely example descriptions of this application defined by the accompanying claims, and are considered as any of or all modifications, variations, combinations or equivalents that cover the scope of this application. It is clear that, a person skilled in the art can make various modifications and variations to this application without departing from the scope of this application. In this way, this application is intended to cover these modifications and variations of this application provided that they fall within the scope of protection of the claims of this application and their equivalent technologies.

**Claims**

1. A power saving method, wherein the method comprises:

   determining that first data is to be transmitted through a first path instead of a second path, wherein the first path is a transmission path between a terminal device and a first access network device, the second path is a transmission path between the terminal device and a second access network device, and the terminal device is separately connected to the first access network device and the second access network device; and
   completely or incompletely stopping monitoring a physical downlink control channel PDCCH between the terminal device and the second access network device.

2. The method according to claim 1, wherein incompletely stopping monitoring the PDCCH comprises: stopping monitoring downlink control information that is transmitted through the PDCCH and that is scrambled by using a preset scrambling identifier.

3. The method according to claim 1 or 2, wherein incompletely stopping monitoring the PDCCH comprises:

   monitoring the PDCCH based on a first cycle, wherein the first cycle is greater than an original monitoring cycle of the PDCCH; and/or
   monitoring the PDCCH in first duration, wherein the first duration is less than original monitoring duration of the PDCCH.

4. The method according to any one of claims 1 to 3, wherein completely or incompletely stopping monitoring the PDCCH comprises: completely or incompletely stopping, by a first medium access control MAC entity, monitoring the PDCCH, wherein the first MAC entity is a MAC entity that is in the terminal device and that corresponds to the second path.

**5.** The method according to claim 4, wherein completely or incompletely stopping monitoring the PDCCH comprises:

when there is no to-be-transmitted data in the first MAC entity and/or a radio link control RLC entity associated with the first MAC entity, completely or incompletely stopping monitoring the PDCCH.

**6.** The method according to claim 5, wherein before completely or incompletely stopping monitoring the PDCCH, the method further comprises:

when there is to-be-transmitted data in the first MAC entity and/or the RLC entity, sending the to-be-transmitted data to the second access network device.

**7.** The method according to any one of claims 4 to 6, wherein completely or incompletely stopping monitoring the PDCCH comprises:

when a radio bearer associated with the first MAC entity does not comprise a first radio bearer, completely or incompletely stopping monitoring the PDCCH, wherein the first radio bearer is a radio bearer corresponding to a first service, the first service is a service other than a service corresponding to first data in services corresponding to the first MAC entity, and the radio bearer comprises at least one of a signaling radio bearer SRB or a data radio bearer DRB.

**8.** The method according to any one of claims 1 to 7, wherein the method further comprises:

obtaining first indication information, wherein the first indication information indicates to completely or incompletely stop monitoring the PDCCH.

**9.** The method according to claim 8, wherein obtaining the first indication information comprises:

sending second indication information to the first access network device and/or the second access network device, wherein the second indication information indicates that the first data is to be transmitted through the first path instead of the second path; and
receiving the first indication information from the first access network device and/or the second access network device.

**10.** The method according to claim 9, wherein the second indication information comprises an identifier ID of a cell group that is in the second access network device and that serves the terminal device, and/or duration for completely or incompletely stopping monitoring the PDCCH.

**11.** A power saving method, wherein the method comprises:

determining that first data is to be transmitted through a first path instead of a second path, wherein the first path is a transmission path between a terminal device and a first access network device, the second path is a transmission path between the terminal device and a second access network device, and the terminal device is separately connected to the first access network device and the second access network device; and

sending first indication information to the terminal device, or sending third indication information to the second access network device, wherein the first indication information indicates the terminal device to completely or incompletely stop monitoring a physical downlink control channel PDCCH between the terminal device and the second access network device, and the third indication information indicates that the first data is to be transmitted through the first path instead of the second path.

**12.** The method according to claim 11, wherein determining that the first data is to be transmitted through the first path instead of the second path comprises:

receiving second indication information from the terminal device, wherein the second indication information indicates that the first data is to be transmitted through the first path instead of the second path; and
determining, based on the second indication information, that the first data is to be transmitted through the first path instead of the second path.

**13.** The method according to claim 12, wherein the second indication information comprises an identifier ID of a cell group that is in the second access network device and that serves the terminal device, and/or duration for completely or incompletely stopping monitoring the PDCCH.

**14.** A power saving method, wherein the method comprises:

receiving fourth indication information from a terminal device or a first access network device, wherein the fourth indication information indicates that first data is to be transmitted through a first path instead of a second path, the first path is a transmission path between the terminal device and the first access network device, the second path is a transmission path between the terminal device and a second access network device, and the terminal device is separately connected to the first access network device and the second access network device; and

sending first indication information to the terminal device, wherein the first indication information indicates the terminal device to completely or incompletely stop monitoring a physical downlink control channel PDCCH between the terminal device and the second access network device.

15. The method according to claim 14, wherein the fourth indication information comprises an identifier ID of a cell group that is in the second access network device and that serves the terminal device, or duration for completely or incompletely stopping monitoring the PDCCH.

16. A communication apparatus, wherein the communication apparatus comprises a processor, and the processor is configured to run a computer program or instructions, to enable the communication apparatus to perform the method according to any one of claims 1 to 10, the method according to any one of claims 11 to 13, or the method according to claim 14 or 15.

17. A computer-readable storage medium, wherein the computer-readable storage medium stores computer instructions or a program, and when the computer instructions or the program is run on a computer, the method according to any one of claims 1 to 10, the method according to any one of claims 11 to 13, or the method according to claim 14 or 15 is performed.

Data frame 1   Data frame 2   Data frame 3

FIG. 1

User plane
protocol stack

SDAP

PDCP

RLC

MAC

PHY

FIG. 2

FIG. 3

Data

Data

FIG. 4

FIG. 5

FIG. 6

FIG. 7

Terminal device

S801: Determine that first data is to be transmitted through a first path instead of a second path, where the first path is a transmission path between the terminal device and a first access network device, the second path is a transmission path between the terminal device and a second access network device, and the terminal device is separately connected to the first access network device and the second access network device

S802: Completely or incompletely stop monitoring a physical downlink control channel PDCCH between the terminal device and the second access network device

FIG. 8

PDCP

RLC 1　　RLC 2　　RLC 3　　RLC 4

MAC 1　　　　　　MAC 2

MN (MCG)　　　　　SN (SCG)

FIG. 9

```
┌─────────────────────────┐                              ┌─────────────────────────┐
│                         │                              │   First access network  │
│     Terminal device     │                              │         device          │
│                         │                              │                         │
└────────────┬────────────┘                              └────────────┬────────────┘
             │                                                         ╎
             │                        ┌ ─ ─ ─ ─ ─ ─ ─ ─ ─ ─ ─ ─ ─ ─ ─ ─┴─ ─ ─ ─ ─ ─ ─ ─ ┐
             │                        ╎ S803: Determine that first data is to be         ╎
             │                        ╎ transmitted through a first path instead         ╎
             │                        ╎              of a second path                    ╎
             │                        └ ─ ─ ─ ─ ─ ─ ─ ─ ─ ─ ─ ─ ─ ─ ─ ─┬─ ─ ─ ─ ─ ─ ─ ─ ┘
             │         S804: First indication information, where the first
             │      indication information indicates the terminal device
             │      to completely or incompletely stop monitoring a
             │      PDCCH between the terminal device and a second
             ◄─ ─ ─ ─ ─ ─ ─ access network device ─ ─ ─ ─ ─ ─ ─ ─ ─ ─ ─┤
┌────────────┴────────────┐                                            ╎
│ S801: Determine that the first data is to                            ╎
│  be transmitted through the first path                               ╎
│         instead of the second path                                   ╎
└────────────┬────────────┘                                            ╎
┌────────────┴────────────┐                                            ╎
│ S802: Completely or incompletely stop                                ╎
│  monitoring the PDCCH between the                                    ╎
│  terminal device and the second access                               ╎
│            network device                                            ╎
└────────────┬────────────┘                                            ╎
             │                                                         ╎
```

FIG. 10

Second access
network device

Terminal
device

First access
network device

S803: Determine that
first data is to be
transmitted through a
first path instead of a
second path

S805: Third indication information,
where the third indication
information indicates that the first
data is to be transmitted through the
first path instead of the second path

S806: Determine first indication
information, where the first indication
information indicates the terminal
device to completely or incompletely
stop monitoring a PDCCH between the
terminal device and the second access
network device

S807: First indication
information

S801: Determine that the first data is
to be transmitted through the first
path instead of the second path

S802: Completely or incompletely
stop monitoring the PDCCH between
the terminal device and the second
access network device

FIG. 11

FIG. 12

FIG. 13

FIG. 14

Second access
network device

Terminal device

S801: Determine that first data is
to be transmitted through a first
path instead of a second path

S808: Second indication information, where the
second indication information indicates that the
first data is to be transmitted through the first
path instead of the second path

S806: Determine first indication
information, where the first
indication information indicates the
terminal device to completely or
incompletely stop monitoring a
PDCCH between the terminal
device and the second access
network device

S807: First indication information

S802: Completely or incompletely
stop monitoring the PDCCH
between the terminal device and
the second access network device

FIG. 15

First data

PDCP

RLC 1 | RLC 2 | RLC 3 | RLC 4

MAC 1

MAC 2

Second indication information

First indication information

MN (MCG)

SN (SCG)

FIG. 16

FIG. 17

First data

PDCP

RLC 1    RLC 2    RLC 3    RLC 4

MAC 1    MAC 2

Second indication
information

First indication
information

Third indication
information

MN (MCG)    SN (SCG)

FIG. 18

Communication apparatus    190

Processing
module    1901

Transceiver
module    1902

FIG. 19

Communication apparatus 2000

Processor — 2001

Instructions

Memory — 2003

Instructions

Transceiver — 2002

Radio frequency
circuit

Antenna

FIG. 20

— 2100

Processor — 2101

CPU 0

CPU 1

Memory — 2103

2102 —

Communication
interface — 2104

Output
device — 2105

Input
device — 2106

FIG. 21

## INTERNATIONAL SEARCH REPORT

| International application No. |
| --- |
| **PCT/CN2023/141128** |

### A.   CLASSIFICATION OF SUBJECT MATTER

H04W52/02(2009.01)i

According to International Patent Classification (IPC) or to both national classification and IPC

### B.   FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT; ENTXT; DWPI; CNKI; 3GPP: 双连接, 主服务小区, 主小区, 辅服务小区, 辅小区, 主基站, 辅基站, 停止, 跳过, 能耗, 电量, 节省, 节能, 功耗, Master Node, MN, Secondary Node, Primary Cell, Master Cell, PCell, Secondary Cell, SCell, MCG, Master Cell Group, SCG, Secondary Cell Group, Dual-Connectivity, DC, Stop, skip, power, save

### C.   DOCUMENTS CONSIDERED TO BE RELEVANT

| Category* | Citation of document, with indication, where appropriate, of the relevant passages | Relevant to claim No. |
| --- | --- | --- |
| X | CN 111194074 A (BEIJING SPREADTRUM HIGH-TECH COMMUNICATIONS TECHNOLOGY CO., LTD.) 22 May 2020 (2020-05-22) description, paragraphs 86-169 | 1-17 |
| X | CN 113557777 A (OPPO GUANGDONG MOBILE TELECOMMUNICATIONS CORP., LTD.) 26 October 2021 (2021-10-26) description, paragraphs 0037, 0047-0122, 0206 and 0213 | 1-17 |
| A | CN 109429258 A (RESEARCH INSTITUTE OF CHINA MOBILE COMMUNICATIONS CORPORATION et al.) 05 March 2019 (2019-03-05) entire document | 1-17 |
| A | CN 110839301 A (VIVO COMMUNICATION TECHNOLOGY CO., LTD.) 25 February 2020 (2020-02-25) entire document | 1-17 |

☑ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 March 2024** | **19 March 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/141128** |

| C. | DOCUMENTS CONSIDERED TO BE RELEVANT | |
| --- | --- | --- |
| Category* | Citation of document, with indication, where appropriate, of the relevant passages | Relevant to claim No. |
| A | SPREADTRUM COMMUNICATIONS. "Discussion on PDCCH-based power saving channel" <br> *3GPP TSG RAN WG1 Meeting #99 R1-1912573*, 22 November 2019 (2019-11-22), entire document | 1-17 |

Form PCT/ISA/210 (second sheet) (July 2022)

**INTERNATIONAL SEARCH REPORT**
Information on patent family members

International application No.

**PCT/CN2023/141128**

| Patent document cited in search report | | | Publication date (day/month/year) | Patent family member(s) | | | Publication date (day/month/year) |
|---|---|---|---|---|---|---|---|
| CN | 111194074 | A | 22 May 2020 | None | | | |
| CN | 113557777 | A | 26 October 2021 | WO | 2021081918 | A1 | 06 May 2021 |
| | | | | CN | 114337969 | A | 12 April 2022 |
| | | | | IN | 202217010200 | A | 22 April 2022 |
| | | | | MX | 2022004573 | A1 | 06 May 2022 |
| | | | | EP | 4007400 | A1 | 01 June 2022 |
| | | | | US | 2022191790 | A1 | 16 June 2022 |
| | | | | BR | 112022006538 | A2 | 28 June 2022 |
| | | | | KR | 20220092491 | A | 01 July 2022 |
| | | | | VN | 87743 | A | 25 July 2022 |
| | | | | JP | 2023504336 | W | 03 February 2023 |
| CN | 109429258 | A | 05 March 2019 | WO | 2019015460 | A1 | 24 January 2019 |
| CN | 110839301 | A | 25 February 2020 | WO | 2020034840 | A1 | 20 February 2020 |
| | | | | US | 2021168690 | A1 | 03 June 2021 |

Form PCT/ISA/210 (patent family annex) (July 2022)

**EP 4 633 246 A1**

**Patent documents cited in the description**

- CN 202211701531